# EUROPEAN PATENT APPLICATION

(11) **EP 4 800 461 A1**
(43) Date of publication of application: **02.09.2026**
(21) Application number: 26159758.7
(22) Date of filing: 20.02.2026
(51) Int. Cl.: G02C 5/18, G02C 11/02

(54) **EYEWEAR ASSEMBLY WITH A MULTI WIRE CORE ASSEMBLY**

(30) Priority: 28.02.2025 US 202563765316 P
(71) Applicant: Dita, Inc., Aliso Viejo CA 92656 (US)
(72) Inventor: KELLY, Sean, Aliso Viejo, CA 92656 (US); KIM, Dong Whee, Aliso Viejo, CA 92656 (US); CASTILLO, Michael, Aliso Viejo, CA 92656 (US); CHUNG, William, Aliso Viejo, CA 92656 (US)
(74) Representative: Kolster Oy Ab

(57) **Abstract**

An eyewear assembly can include a rim, a first temple, and a second temple. The first temple can be coupled with the rim. The second temple can be coupled with the rim, the second temple including a multi wire core disposed within the second temple. The multi wire core can include a base wire core and an insert wire core. The base wire core can include a body comprising a cavity. The base wire core can include an elongated portion extending from the body along a longitudinal axis of the body. The insert wire core can be disposed in the cavity of the body. The insert wire core can be coupled with the base wire core.

## Description

### CROSS-REFERENCE TO RELATED PATENT APPLICATION

This application claims the benefit of, and priority to, U.S. Provisional Patent Application No. 63/765,316, filed February 28, 2025, the entirety of which is incorporated by reference herein.

### TECHNICAL FIELD

The present application relates generally to glasses assemblies and glasses manufacturing.

### BACKGROUND

A pair of glasses can include a frame including a rim and temples. The temples can be connected with the rim via hinges. Each temple can include a wire core embedded within the respective temple. The wire cores can support and retain the respective temples. For example, when the temples of glasses are heated and bent to fit around the ears of a wearer, the wire cores can retain the bent shape of the temples.

### SUMMARY

In one set of embodiments, an eyewear assembly can include a rim, a first temple, and a second temple. The first temple can be coupled with the rim. The second temple can be coupled with the rim. The second temple can include a multi wire core disposed within the second temple. The multi wire core can include a base wire core. The base wire core can include a body comprising a cavity and an elongated portion extending from the body along a longitudinal axis of the body. The multi wire core can include an insert wire core disposed in the cavity of the body. The insert wire core can be coupled with the base wire core.

In one set of embodiments, a method of manufacturing an eyewear assembly can include inserting an insert wire core into a cavity of a base wire core to form a multi wire core assembly. The method can include heating a temple of the eyewear assembly within a mold to a target temperature. The method can include inserting the multi wire core assembly into the temple within the mold after heating the temple to the target temperature.

In one set of embodiments, a multi wire core assembly for a temple of an eyewear assembly can include a base wire core and an insert wire core. The base wire core can include a body comprising a cavity. The base wire core can include an elongated portion extending from the body along a longitudinal axis of the body. The multi wire core assembly can include an insert wire core disposed in the cavity of the body. The insert wire core can be coupled with the base wire core.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims, in which:
Figure 1 is a perspective view of a glasses assembly including a multi wire core, the multi wire core including a base wire core and an insert wire core;
Figure 2 is a side view of a glasses assembly including a multi wire core, the multi wire core including a base wire core and an insert wire core;
Figure 3 is an exploded perspective view of a front side of the multi wire core of Figure 1;
Figure 4 is an exploded perspective view of a back side of the multi wire core of Figure 1;
Figure 5 is a perspective view of the multi wire core of Figure 1;
Figure 6 is a top view of the multi wire core of Figure 1;
Figure 7 is a bottom view of the multi wire core of Figure 1;
Figure 8 is a side view of the multi wire core of Figure 1;
Figure 9 is a cross-sectional view of the multi wire core of Figure 1 taken along plane A-A in Figure 6;
Figure 10 is a perspective view of a base wire core of the multi wire core of Figure 1;
Figure 11 is a top view of the base wire core of the multi wire core of Figure 1;
Figure 12 is a cross-sectional view of the base wire core of the multi wire core of Figure 1 taken along plane B-B in Figure 11;
Figure 13 is a perspective view of the insert wire core of the multi wire core of Figure 1;
Figure 14 is a bottom view of the insert wire core of the multi wire core of Figure 1;
Figure 15 is a side view of the insert wire core of the multi wire core of Figure 1;
Figure 16 is a top view of another embodiment of the multi wire core of Figure 1 including a base wire core and an insert wire core with rounded corners;
Figure 17 is a side view of the multi wire core of Figure 16;
Figure 18 is a top view of the insert wire core of the multi wire core of Figure 16;
Figure 19 is a side view of the insert wire core of the multi wire core of Figure 16;
Figure 20 is a cross-sectional view of the insert wire core of Figure 16 taken along plane C-C in Figure 18;
Figure 21 is a top view of a multi wire core with the base wire core and the insert wire core having contrasting colors;
Figure 22 is a top view of a multi wire core where a surface of the insert wire core is textured;
Figure 23 is a diagram of a multi wire core being shot into a temple of the glasses assembly of Figure 1;
Figure 24 is a diagram of a multi wire core being laminated into a temple of the glasses assembly of Figure 1;
Figure 25 is a flow diagram of a method of manufacturing a glasses assembly including a multi wire core;
Figures 26-28 are perspective views a multi wire core with different insert wire cores formed from different materials or having different colors;
Figure 29 depicts a front view of a multi wire core including a base wire core and an s-shaped insert wire core;
Figure 30 depicts an exploded view of a multi wire core including a base wire core and an s-shaped insert wire core;
Figure 31 depicts a front view of a multi wire core including a base wire core with rounded corners and an s-shaped insert wire core;
Figure 32 depicts a front view of the s-shaped insert wire core of Figure 31;
Figure 33 depicts a front view of a multi wire core including an insert wire core having an irregular hexagonal shape;
Figure 34 depicts a front view of the insert wire core of Figure 33 having an irregular hexagonal shape;
Figure 35 is a front view of a multi-wire core including a base wire core, a first insert wire core, and a second insert wire core;
Figure 36 is an exploded perspective view of the multi-wire core of Figure 35 including the first insert wire core and the second insert wire core;
Figures 37-42 are front views of the first insert wire core and the second insert wire core, the second insert wire core having a variety of different shapes;
Figure 43 depicts top and side views of a base wire core including a first insert wire core and a second insert wire core on opposite sides of the base wire core;
Figure 44 is a perspective view of a base wire core including a first s-shaped wire core and a second insert wire core on opposite sides of the base wire core; and
Figure 45 depicts top and side views of a base wire core including a first s-shaped wire core and a second insert wire core on opposite sides of the base wire core.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION

Following below are more detailed descriptions of various concepts related to, and implementations of, methods, apparatuses, and systems for a multi wire core assembly for an eyewear arm. The various concepts introduced above and discussed in greater detail below may be implemented in any of a number of ways, as the described concepts are not limited to any particular manner of implementation. Examples of specific implementations and applications are provided primarily for illustrative purposes.

### I. Overview

An eyewear assembly can include two temples. A wire core is integrated into each of the temples. The temples can be acetate temples, and can be semi-translucent such that the wire core can be visible when an observer looks at the eyewear assembly. This enables the eyewear assembly to present various aesthetic effects via the wire core. However, it can be difficult to decorate a wire core that is integrated into a temple due to the high heat and pressure the wire core experiences during integration into the temple, which could break, damage, or burn any decorative components included on the wire core. For example, during manufacturing, the temples can be heated, and placed in a mold. Then, a wire core can be shot or pressed from an end of the temples into the temples. This high heat and pressure applied to a wire core can make it difficult or impossible to desirably decorate the wire core.

To solve these and other technical problems, the present solution relates to a multi wire core assembly for use in a temple of an eyewear assembly. The multi wire core assembly can include two wire cores (e.g., a dual wire core), a base wire core and an insert wire core (e.g., a first wire core and a second wire core). The base wire core can be formed from a heat resistant material, such as titanium. The insert wire core can be inserted into a cavity of the base wire core. The cavity of the base wire core can protect and shield the insert wire core during manufacturing from high heat and/or pressure. Specifically, during manufacturing, the multi wire core assembly can be shot at high temperatures and pressures into a temple of an eyewear assembly without undesirably affecting the insert wire core. Because the insert wire core is protected from high heat and temperature, the insert wire core can be decorated, e.g., have various etchings, markings, jewels, patterns, textures, etc. These decorations are visible after manufacture of the eyewear assembly, which is desirable. Furthermore, the shielding provided by the base wire core enables use of softer metals or other materials for the insert wire core that might otherwise melt, deform, or burn during the manufacturing process without the multi wire core assembly described herein. For example, the insert wire core can include or be formed from carbon fiber, horn, ceramic, wood, gold, silver, etc. Because the insert wire core can include or be formed from a material different (or be colored differently) than the base wire core, the multi wire core assembly can provide contrasting colors, not otherwise available with a conventional core used in other glasses.

Because the multi wire core assembly is formed from multiple separate components, the base wire core can be coupled with different insert wire cores of different appearances to customize the appearance of the multi wire core assembly. This results in a manufacturing benefit, because one single base wire core can be manufactured, but different insert wire cores can be manufactured to customize the appearance of the multi wire core assembly. Instead of manufacturing a separate pair of conventional wire cores for each style, model, or brand of glasses, a manufacturer utilizing the multi wire core assembly described herein is able to utilize the same base wire core for multiple styles, models, and brands of eyewear assemblies while simply changing the insert wire core depending on the style, model, or brand. Because the insert wire core is smaller than the conventional wire cores, the multi wire core assembly herein may decrease costs for the manufacturer while simultaneously enabling the manufacturer to produce eyewear assemblies with aesthetic effects that cannot be provided by conventional glasses.

### II. Overview of Example Eyewear Assembly

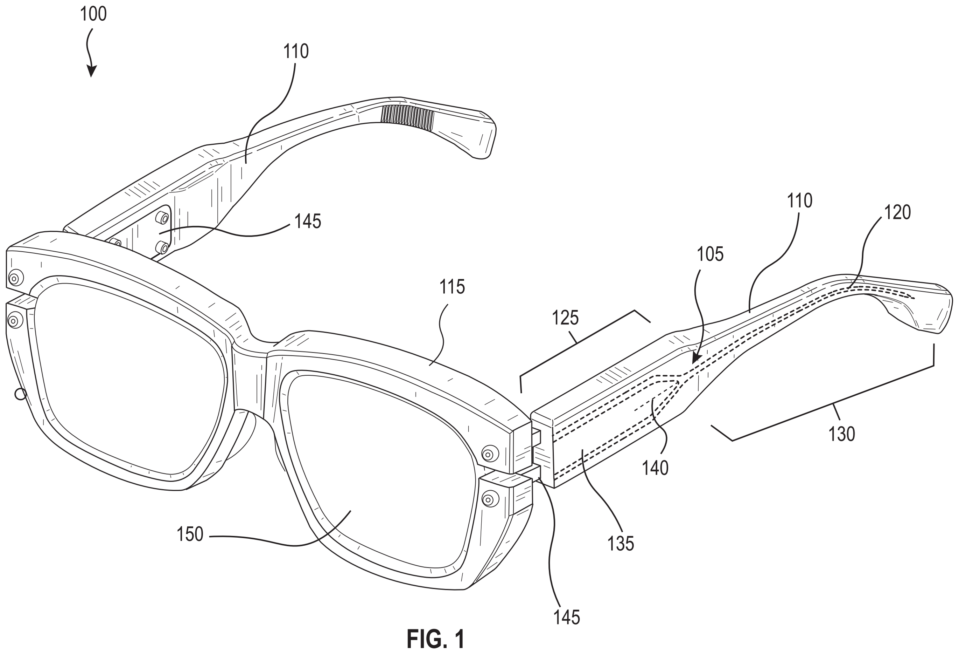

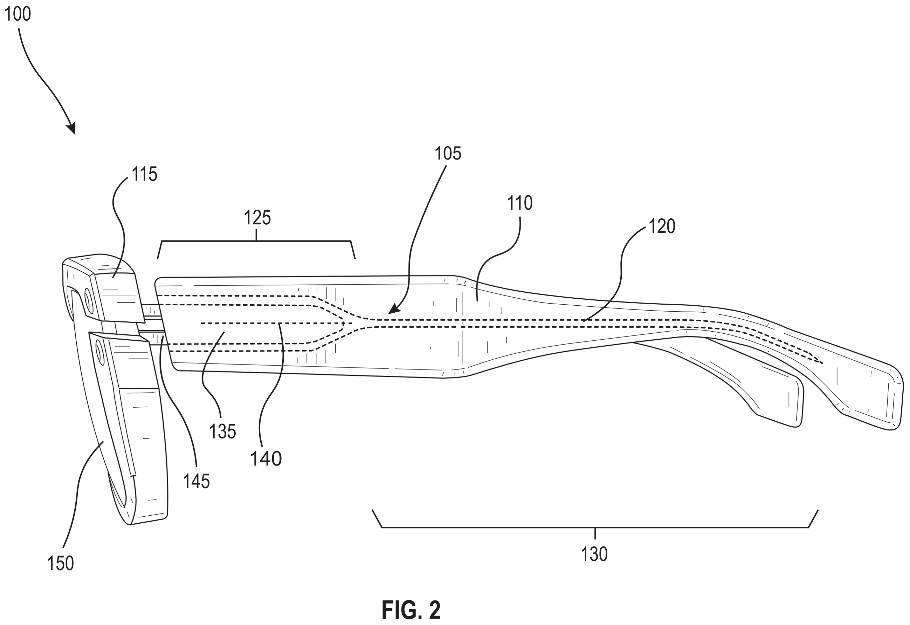

Referring now to Figures 1-2, an eyewear assembly 100 is shown. The eyewear assembly 100 is configured to be worn by a user (e.g., human, adult, child. etc.). The eyewear assembly 100 provides the user with aesthetic (e.g., fashionable, etc.) and/or functional (e.g., optical, etc.) benefits. The eyewear assembly 100 can be a pair of glasses, an optical device, a vision aid, a pair of spectacles, sports glasses, sunglasses, augmented reality/virtual reality (AR/VR) glasses, etc. The eyewear assembly 100 includes a multi wire core assembly 105. As is described in more detail herein, the multi wire core assembly 105 provides both structural support to the eyewear assembly 100 and aesthetic details for the eyewear assembly 100.

The multi wire core assembly 105 includes a base wire core 120 and an insert wire core 135 is shown. The eyewear assembly 100 can include lenses 150 that are clear or tinted. The lenses 150 can be polarized. The eyewear assembly 100 can be prescription or non-prescription glasses, e.g., the lenses 150 can be prescription or non-prescription lenses.

The eyewear assembly 100 includes a frame 115 (e.g., rim, etc.). The frame 115 can hold lenses of the eyewear assembly 100. The frame 115 can form a bridge to rest on the nose of a wearer. The frame 115 is coupled (e.g., fixed, secured, fastened, etc.) to at least one arm or temple 110 of the eyewear assembly 100. The eyewear assembly 100 includes a first temple 110 and a second temple 110. The frame 115 can be coupled with a first temple 110 and a second temple 110. For example, a first end or side of the frame 115 can be coupled with a first temple 110. The first temple 110 can extend away from the frame 115 to provide a surface to rest on an ear of a wearer. A second end or side of the frame 115 can be coupled with a second temple 110. The second temple 110 can extend away from the frame 115 to provide a surface to rest on another ear of a wearer. The frame 115 can be coupled with the temples 110 via hinges 145 to fold the temples 110 between stowed and deployed positions. The eyewear assembly 100 can include a first hinge 145 to move a first temple 110 and a second hinge 145 to move a second temple 110.

The temple 110 includes a multi wire core assembly 105. Each temple 110 (or only one temple 110) includes a multi wire core assembly 105. Each temple 110 can include a multi wire core assembly 105 with insert wire cores 135 of the same or different appearances. The temple 110 can be formed or integrally formed from acetate. The multi wire core assembly 105 is disposed within, positioned within, integrated within, shot within, or laminated within the temple 110. The multi wire core assembly 105 includes at least one base wire core 120. The multi wire core assembly 105 includes at least one insert wire core 135. The base wire core 120 and the insert wire core 135 can be coupled together. The base wire core 120 can be formed from titanium, steel, aluminum, etc. The insert wire core 135 can be formed from titanium, steel, aluminum, carbon fiber, horn, ceramic, wood, gold, silver, etc.

The base wire core 120 includes a body 125. The base wire core 120 includes an elongated portion 130. The elongated portion 130 can extend from an end of the body 125 along a longitudinal axis 140 of the body 125 or the multi wire core assembly 105. The longitudinal axis 140 can be a common longitudinal axis of the multi wire core assembly 105, the base wire core 120, the body 125, the elongated portion 130, or the insert wire core 135.

The base wire core 120 and the insert wire core 135 are separate components coupled together. Because the base wire core 120 and the insert wire core 135 are separate components, the base wire core 120 can be coupled with different insert wire cores 135 of different appearances to customize the appearance of the multi wire core assembly. This results in a manufacturing benefit, because one single base wire core 120 can be manufactured, but different insert wire cores 135 can be manufactured to customize the appearance of the multi wire core assembly. The insert wire core 135 is inserted into, integrated into, or positioned into an opening, hole, or cavity of the base wire core 120. The base wire core 120 includes a cavity, recess, slot, or opening within which the insert wire core 135 is disposed, placed, positioned, inserted, or put. The cavity of the base wire core 120 is shaped to conform with at least a portion of an outer surface of the insert wire core 135.

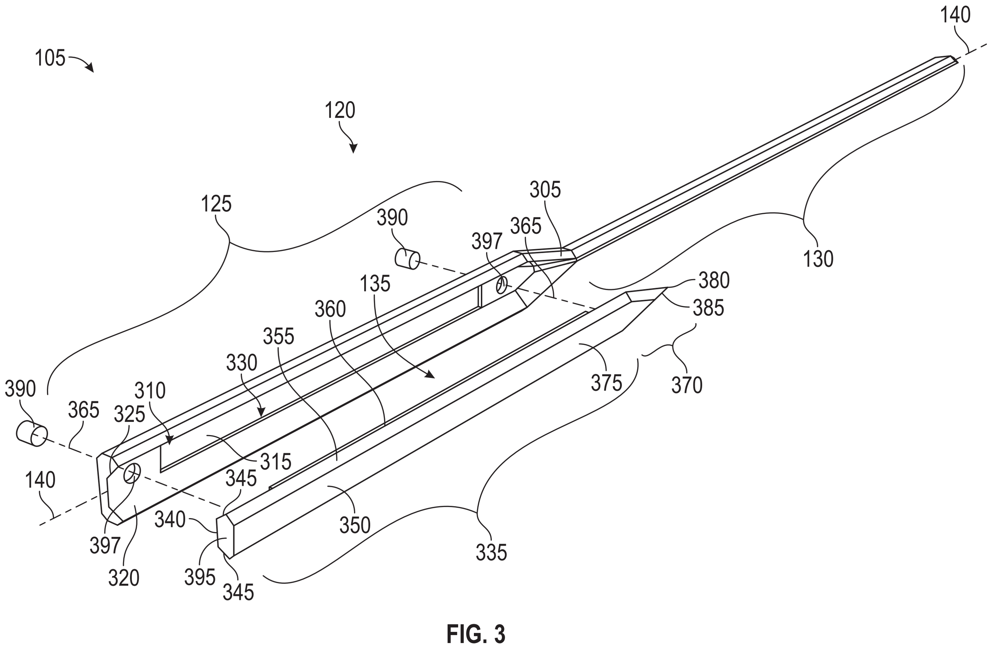

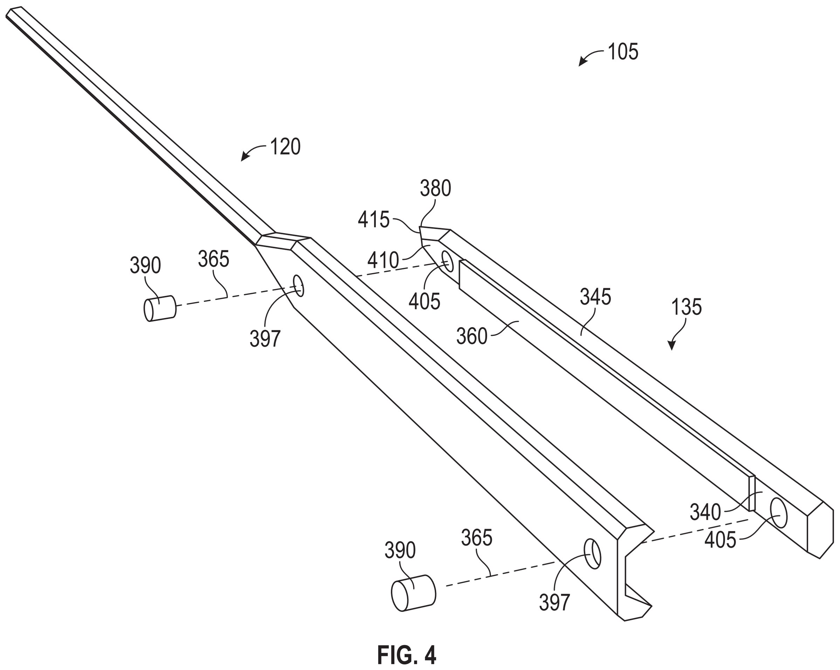

Referring now to Figures 3-4, exploded perspective views of the multi wire core assembly 105 are shown. The elongated portion 130 can have a tubular shape, a cylindrical shape, a rectangular prism shape, a pentagonal prism shape, a hexagonal prism shape, an octagonal prism shape, etc. The elongated portion 130 can extend from an end, point, or apex 305 of the base wire core 120 outwards away from the base wire core 120 along the longitudinal axis 140.

The body 125 includes at least one cavity 310. The cavity 310 forms a space or region within which at least a portion of the insert wire core 135 is disposed, placed, positioned, or installed. The cavity 310 can have a tubular shape, a cylindrical shape, a rectangular prism shape, a pentagonal prism shape, a hexagonal prism shape, an octagonal prism shape, etc. The cavity 310 can include a bottom surface 315. The bottom surface 315 can form a bottom of the cavity 310. The bottom surface 315 can be flat or smooth. The bottom surface 315 can extend along the longitudinal axis 140. The bottom surface 315 can extend perpendicular to the longitudinal axis 140. The bottom surface 315 can extend in opposing directions perpendicular to the longitudinal axis 140 to upper and bottom edges with surfaces 320 and 325.

The body 125 can include a surface 320 extending from an edge of the bottom surface 315 at an angle relative to the surface of the surface 315. The surface 320 can extend in a direction perpendicular to the longitudinal axis 140. The surface 320 can extend from the surface 315 at an angle relative to a plane formed by the surface 315. The angle can be an oblique angle. The angle can be approximately 45 degrees. The angle can be 43-47 degrees. The angle can be less than 43 degrees. The angle can be greater than 47 degrees. The body 125 can include a surface 325 extending from an edge of the bottom surface 315 at an angle relative to the plane formed by the surface 315. The surface 325 can extend in a direction perpendicular to the longitudinal axis 140. The angle can be an oblique angle. The angle can be approximately 45 degrees. The angle can be 43-47 degrees. The angle can be less than 43 degrees. The angle can be greater than 47 degrees.

The insert wire core 135 can include a portion 335. The portion 335 can have outer surfaces forming a shape to conform with the inner shape of the cavity 310. For example, the portion 335 can have a flat surface 340 to rest against the surface 315, and angled surfaces 345 to rest against the surfaces 325 and 320 of the cavity 310. The portion 335 can have a tubular shape, a cylindrical shape, a rectangular prism shape, a pentagonal prism shape, a hexagonal prism shape, an octagonal prism shape, etc. At least a portion of the insert wire core 135 can extend out of the cavity or be visible by an observer from outside the cavity. For example, at least one outer surface can extend out of the cavity 310 or be visible from outside the cavity. In some embodiments, none of the outer surfaces extend out of the cavity 310. In some embodiments, the insert wire core 135 does not extend above an upper edge or boundary of the cavity 310 such that the base wire core 120 protects the insert wire core 135 during manufacturing.

The portion 335 can include an outer surface 350 opposite an inner surface 340. The outer surface 350 can be disposed outside the cavity 310 or be visible from outside the cavity. The portion 335 can include angled surfaces 355 opposite the surfaces 345. The outer surfaces 355 can be disposed outside the cavity 310 or be visible from outside the cavity. The angled surface 355 can extend from the surface 350 to respective edges with the inner surfaces 345.

The body 125 can include a slot 330. The slot 330 can be a cavity, opening, or space. The slot 330 can be formed in the surface 315 of the cavity 310. The slot 330 can be a rectangular prism shape. The slot 330 can have a trapezoidal prism shape. The portion 335 of the insert wire core 135 can include a protrusion 360. The protrusion 360 can extend outwards from the surface 340 of the insert wire core 135. For example, the protrusion 360 can extend outwards in a direction perpendicular to a longitudinal axis of the insert wire core 135 (e.g., the longitudinal axis 140).

The protrusion 360 can be a prismatic shape or trapezoidal prism shape. The shape of the protrusion 360 can conform to the shape of the slot 330. In this regard, the slot 330 can frictionally hold or couple the protrusion 360, thereby at least partially coupling the insert wire core 135 to the cavity 310 of the base wire core 120. Therefore, during manufacturing when the multi wire core assembly 105 experiences high heat or pressure, the insert wire core 135 may remain coupled to the base wire core 120 via the slot 330 and the protrusion 360, and the insert wire core 135 may not become dislodged during manufacturing.

Furthermore, the multi wire core assembly 105 can include at least one connector 390. The connector 390 can be a cylindrical shaped component, such as a screw, bolt, nail, etc. The connector 390 can insert into or through openings 397 in the body 125. The connector 390 can insert into or through openings 405 in the insert wire core 135. The connector 390 can extend between the opening 397 and the opening 405 to hold the body 125 and the insert wire core 135 together. The connector 390 can couple the insert wire core 135 with the body 125. The openings 397 and 405 can be cylindrical shaped openings, rectangular solid shaped openings, hexagonal prism shaped openings, etc. The openings 397 and 405 can have axes 365, which can be perpendicular to the axis 140.

In some embodiments, instead of, or in addition to coupling the insert wire core 135 with the base wire core 120 via the connector 390, an adhesive can couple the base wire core 120 with the insert wire core 135. An adhesive (e.g., an epoxy, acrylic adhesive, polyvinyl acetate, etc.) can be applied to the cavity 310 and/or the slot 330, e.g., applied to all or some of the inner surfaces of the cavity 310 or the slot 330. In some embodiments, the adhesive can be applied to surfaces of the insert wire core 135 before the insert wire core 135 is inserted into the cavity 310. For example, the adhesive can be applied to the surfaces 345 and 340. After the adhesive cures, the multi wire core assembly 105 can be disposed into a temple 110. The adhesive can help retain the insert wire core 135 within the base wire core 120 when shooting the multi wire core assembly 105 into the temple 110.

The insert wire core 135 can include a pointed end 370. The pointed end 370 can be opposite an end 395 of the insert wire core 135. The end 395 can be a flat surface formed by the hexagonal prism shape of the portion 335. The end 395 can be a base of the hexagonal prism shape of the portion 335. The pointed end 370 can have two parallel triangular surfaces 375 and 410. The surfaces 375 and 410 can be triangular shaped or truncated triangular shaped. An end or point of the triangle can be connected to an apex 380 of the pointed end 370. An edge 385 can connect a point, end, or edge of the triangular surface 375 to the apex 380. An edge 415 can connect a point, end, or edge of the triangular surface 410 to the apex 380.

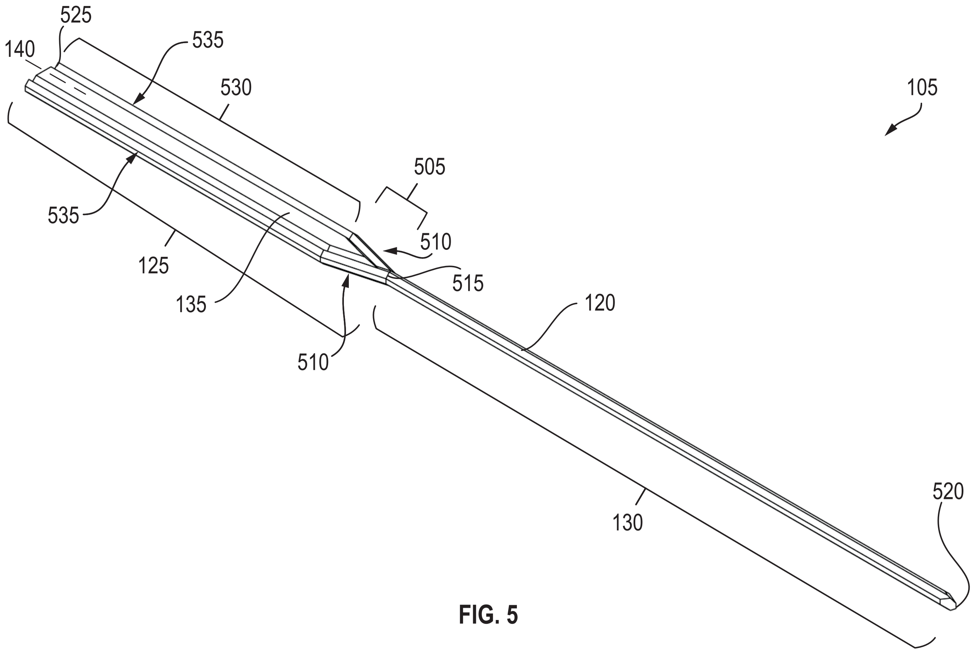

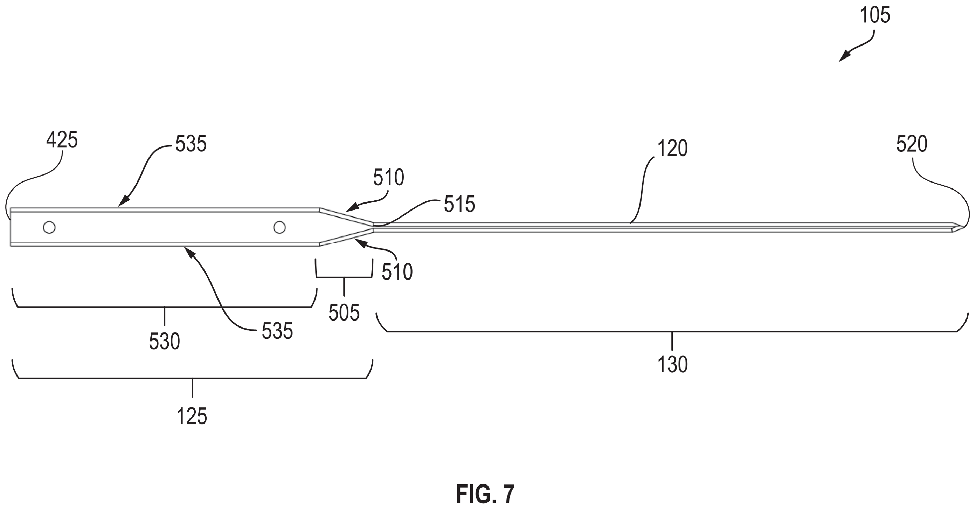

Referring now to Figures 5-8, the insert wire core 135 installed in the base wire core 120 is shown. The body 125 of the base wire core 120 can include a sloped portion 505 and a flat portion 530. The flat portion 530 includes lateral sides 535. The lateral sides 535 can extend from an end 525 of the base wire core 120 along the longitudinal axis 140 towards the end 520 of the base wire core 120. The end 520 can be opposite the end 525. The end 520 and the end 525 can both be positioned on, or intersect with, the longitudinal axis 140 of the multi wire core assembly 105. The end 520 can be a point, an apex, a sloped section, or a conical section. The end 525 can be a plane or surface. The end 525 can be a surface perpendicular with the longitudinal axis 140. The flat portion 530 can extend from the end 525 to the sloped portion 505. The sides 535 can extend from the end 525 parallel with one another. In this regard, the cross-sectional areas of the flat portion 530 can be constant from the end 525 to the beginning of the sloped portion 505.

The sloped portion 505 can be a frustum or converging section. The sloped portion 505 can have a decreasing cross-sectional area along the longitudinal axis 140 moving towards the end 520. The sloped portion 505 can include opposing sides 510. The opposing sides 510 can be non-parallel. The opposing sides 510 can approach each other or the longitudinal axis 140 of the multi wire core assembly 105 moving towards the end 520. The opposing sides 510 can approach one another until they meet at an end 515 of the sloped portion 505. The end 515 can be a cross-sectional area of the base wire core 120 where the sloped portion 505 ends, and the elongated portion 130 begins. The elongated portion 130 can extend from the sloped portion 505 to the end 520. The elongated portion 130 can extend from the end 515 to the end or side 520. The elongated portion 130 can extend along the longitudinal axis 140. The elongated portion 130 can have a constant cross-sectional area (or a decreasing cross-sectional area) from the end 515 to the end 520.

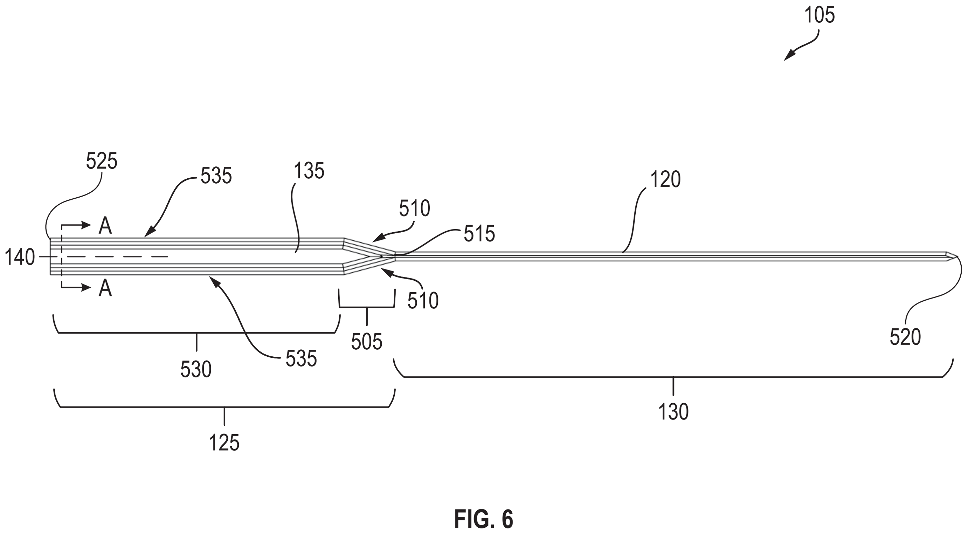

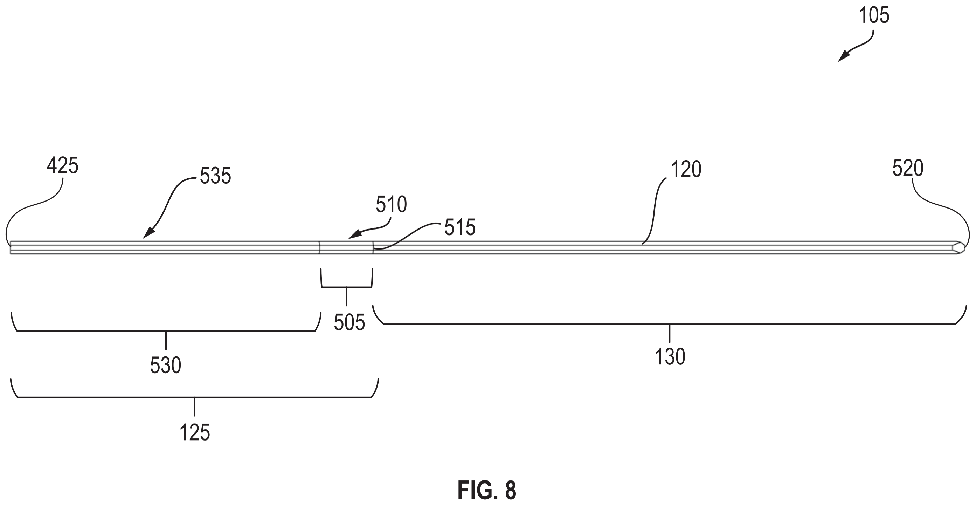

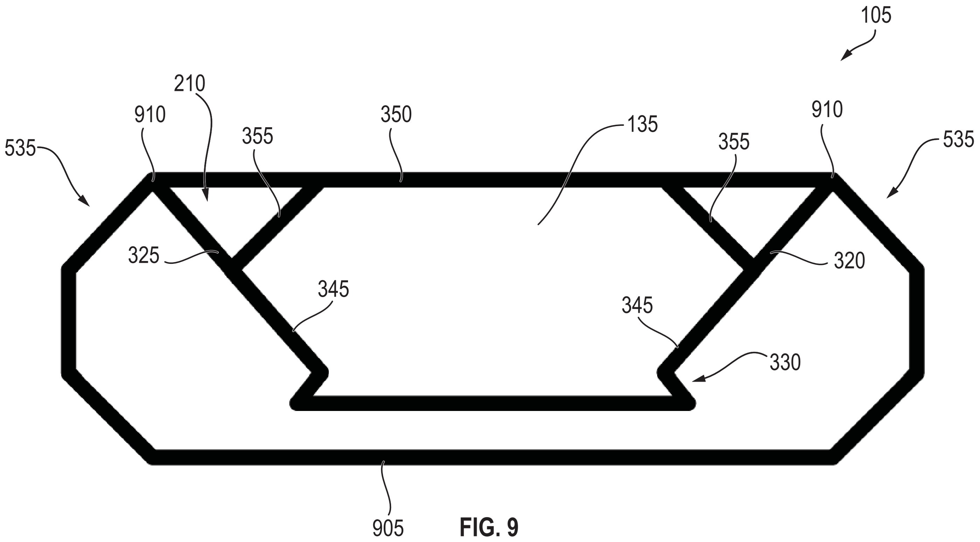

Referring now to Figure 9, a cross-sectional view of the multi wire core assembly 105 taken along plane A-A in Figure 6 is shown. The sides 535 can have outer edges that extend outwards from a bottom surface 905 to a top edge 910 of the base wire core 120. The sides 535 can have three outer surfaces forming a trapezoidal surface, as shown in Figure 8. However, the sides 535 can have any number of surfaces, e.g., four surfaces, five surfaces, six surfaces, etc. The sides 535 can be rounded or smooth, and have an arc, curve, or half circle shape. The surfaces 325 and 320 can slope towards each other approaching the bottom surface 905 or the slot 330. In this regard, the cross-sectional area of the cavity 310 defined at least partially by the surfaces 325 and 320 can decrease from the top edge 910 towards the bottom surface 905. The insert wire core 135 can include sloped surfaces 345 that rest against, touch, or contact the surfaces 325 and 320. The surfaces 355 and 350 can be free or open surfaces. At least a portion of the surfaces 355 and 350 may not touch or contact any surface or portion of the base wire core 120, e.g., the surfaces 325 or 320.

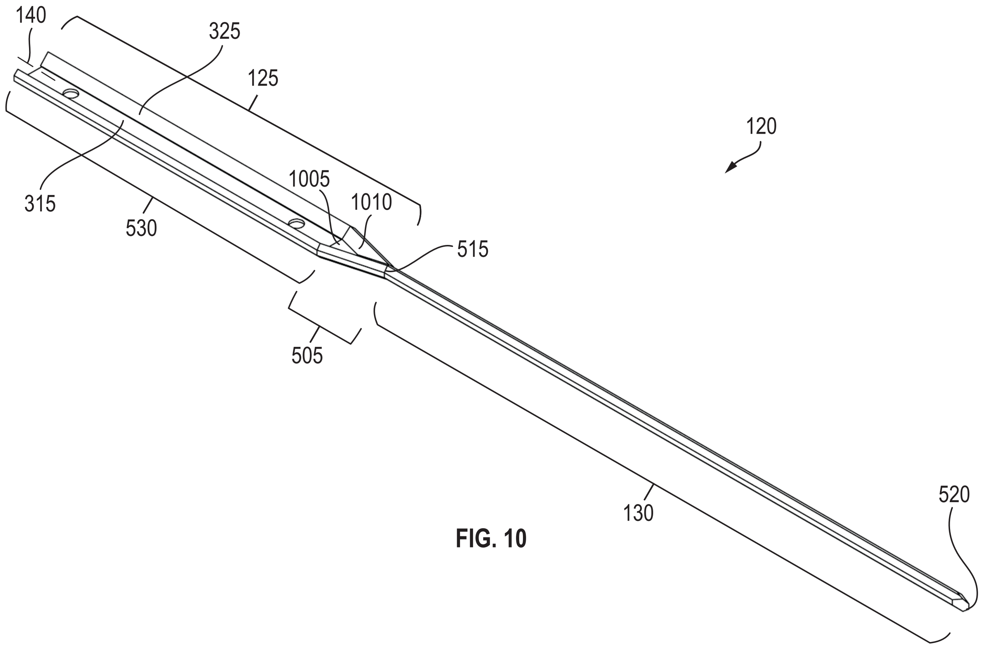

Referring now to Figures 10-11, the base wire core 120 is shown. The sloped portion 505 can include a bottom surface 1005. The bottom surface 1005 can be flush with or parallel with the bottom surface 315. The surfaces 315 and 1005 can be a single contiguous surface. The bottom surface 1005 can extend from an end of the bottom surface 315 towards the end 515 or the end 520. The bottom surface 1005 can have a triangular shaped surface. The bottom surface 1005 can have a truncated triangular shape or a trapezoid shape. The bottom surface 1005 can include two parallel sides of different lengths, one parallel side of the triangle can have a contiguous edge with the bottom surface 315. The other parallel side of the triangle can have a contiguous edge with a surface 1010 of the sloped portion 505. The bottom surface 1005 can extend from the contiguous edge to a surface 1010 continuous with the opposite side of the bottom surface 1005. The bottom surface 1005 can include two non-parallel sides that extend between the parallel sides of the bottom surface 1005. In some embodiments, the parallel edges of the bottom surface 1005 are perpendicular with the longitudinal axis 140 of the multi wire core assembly 105.

The sloped portion 505 can include sloped surfaces 1010. The surfaces 1010 can be trapezoidal surfaces, rectangular surfaces, or square shaped surfaces. The sloped surfaces 1010 can extend from the non-parallel sides of the bottom surface 1005. A first sloped surface 1010 can have an edge contiguous with the surface 325. A second sloped surface 1010 can have an edge contiguous with the surface 320. The first sloped surface 1010 can have an edge contiguous with the surface 1005. The first sloped surface 1010 can extend from the surface 325 to the surface 1005 inwards towards the longitudinal axis 140. The second sloped surface 1010 can have an edge contiguous with the surface 1005. The first sloped surface 1010 can extend from the surface 320 to the surface 1005 inwards towards the longitudinal axis 140.

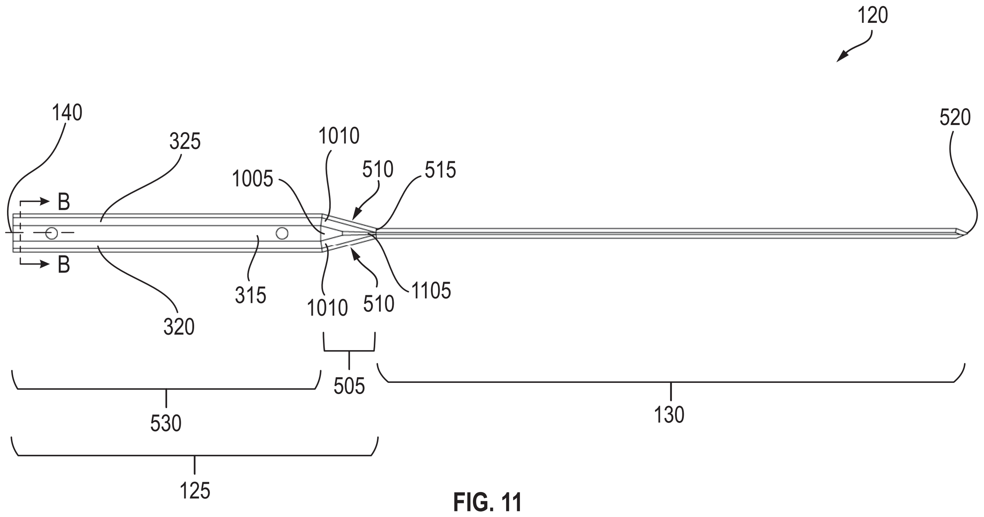

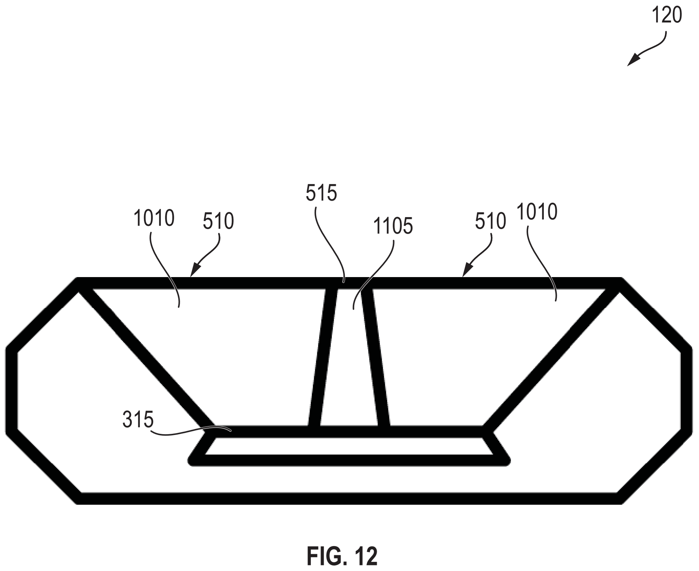

Referring now to Figure 12, a cross-sectional view of the base wire core 120 of the multi wire core assembly 105 taken along plane B-B of FIG. 11 is shown. The surfaces 1010 can slope upwards from the bottom surface 315 up to a top edge of the side 510. Likewise, the surfaces 1010 can slope upwards from the bottom surface 315 up to a top edge of the end 515. Furthermore, the surface 1105 can slope upwards to the top edge of the end 515. The sloped non-parallel sides of the surface 1105 can slope upwards and converge towards one another.

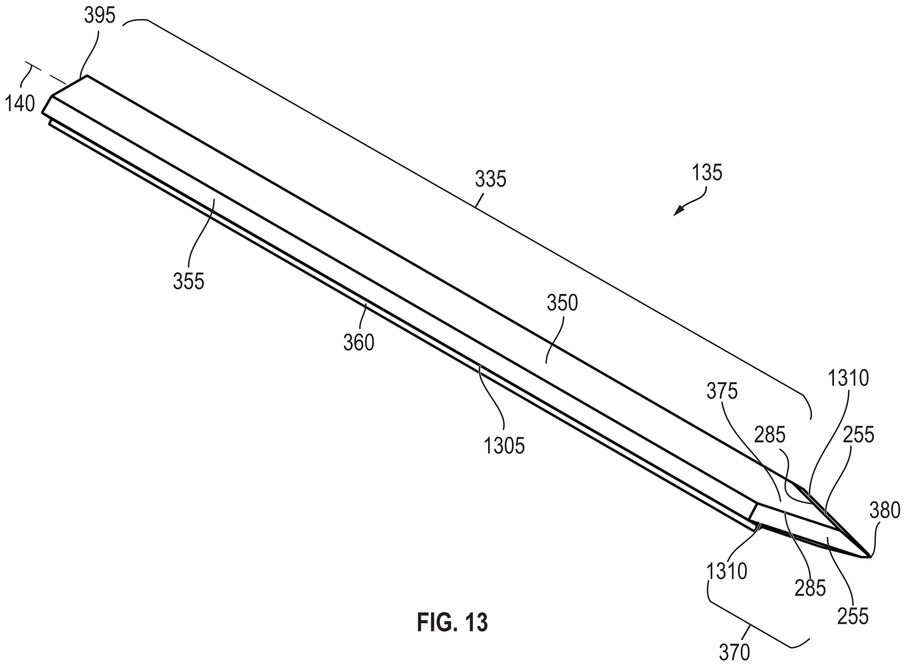

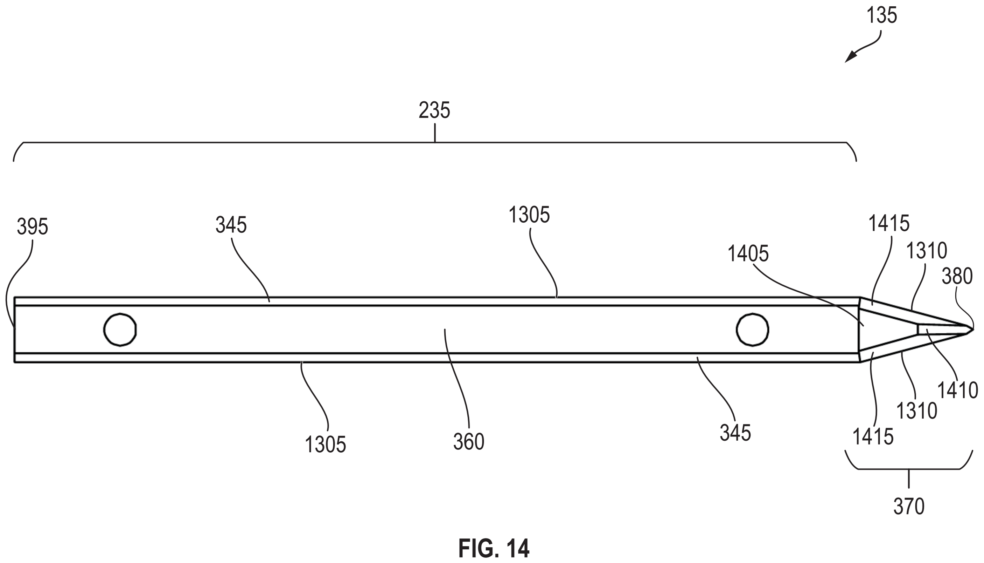

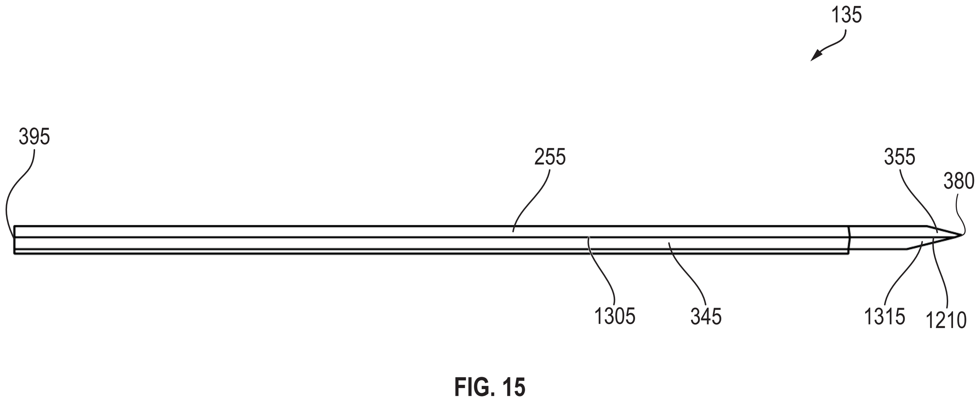

Referring now to Figures 13-15, the insert wire core 135 of the multi wire core assembly 105 is shown. The insert wire core 135 can include the portion 335 and the pointed end 370. The portion 335 of the insert wire core 135 can include edges 1305. The edges 1305 can extend between the end 395 and the pointed end 370. The edges 1305 can extend parallel with the longitudinal axis 140 (and parallel with one another). A first edge 1305 can extend from a first side of the end 395 to a first side of the pointed end 370. A second edge 1305 can extend from a second side of the end 395 opposite the first side of the end 395 to a second side of the pointed end 370 opposite the first side of the pointed end 370.

The surfaces 355 and 345 can extend from the edges 1305. A first surface 345 can extend from a first edge 1305 down away from the surface 350 towards the bottom surface 340. A second surface 345 can extend from a second edge 1305 down away from the surface 350 towards the bottom surface 340 or the protrusion 360. The first surface 345 and the second surface 345 can extend towards each other as they approach the bottom surface 340 or the protrusion 360. A first surface 355 can extend from a first edge 1305 up away from the bottom surface 340 or the protrusion 360 towards the surface 350. A second surface 355 can extend from a second edge 1305 up away from the bottom surface 340 towards the surface 350. The first surface 355 and the second surface 355 can extend towards each other as they approach the surface 350.

The pointed end 370 can include edges 1310. The edges 1310 can extend from ends of the edges 1305 to the apex 380. A first edge 1310 can extend from the first edge 1305 to the apex 380. A second edge 1310 on an opposite side of the insert wire core 135 can extend from a second edge 1305 to the apex 380. The first edge 1310 and the second edge 1310 can extend towards one another and the apex 380.

The pointed end 370 can include a top surface 375 and an opposing bottom surface 1405. The surfaces 375 and 1405 can have the same or a similar shape. For example, both the surfaces 375 and 1405 can have a triangular shape, a truncated triangle shape, or a trapezoidal shape. In some embodiments, the top surface 375 is a triangle shape, while the bottom surface 1405 is a truncated triangle shape. The bottom surface 1405 of the insert wire core 135 can be the same size and shape as the surface 1005 inside the cavity 310 of the base wire core 120. The surface 1405 and the surface 1005 can rest upon each other or contact each other.

The pointed end 370 can include surfaces 1415. The surfaces 1415 can extend up from the bottom surface 1405 to the edges 1310. The edges 1310 can form an outer shape around the bottom surface 1405, for example, the edges 1310 can form a triangular or truncated triangular shape. In this regard, the surfaces 1415 can extend upwards to the edges 1310 away from one another to form opposing sloped surfaces that slope away from one another. The surfaces 1415 can extend to the sides of the surface 1410 and the surfaces 345 respectively. The surfaces 1415 can have a shape and/or size that conforms with or matches surfaces 1010. The surfaces 1415 and the surfaces 1010 can rest upon each other or contact each other.

The pointed end 370 can include a surface 1410. The surface 1410 can have the same size and shape as the surface 1105 in the cavity 310 of the base wire core 120. The surface 1410 can have a rectangular surface, a trapezoidal shape, a rectangle with a triangle on a top side, etc. The surface 1410 can extend from an end of the surface 1405 to the apex 380. The surface 1410 can extend between edges of the surfaces 1415.

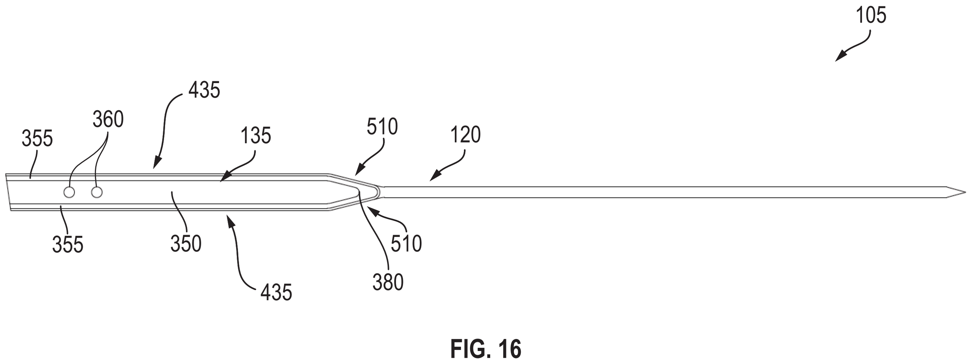

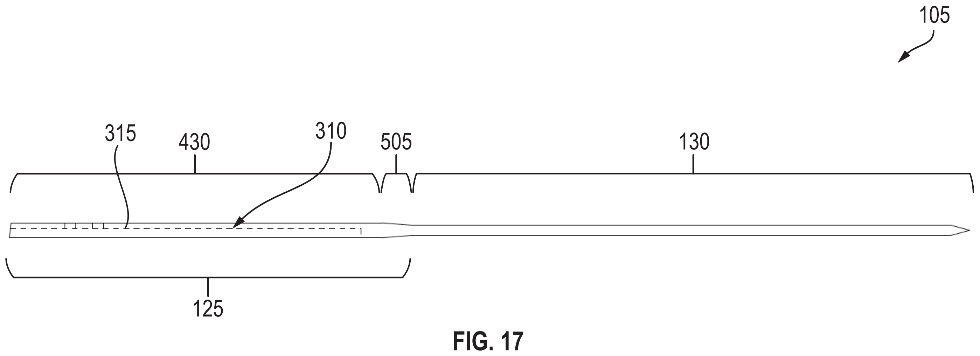

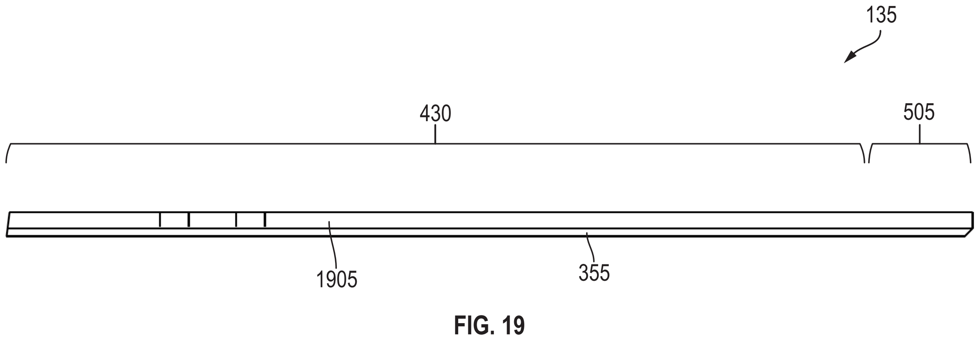

Referring now to Figures 16-19, another embodiment of the multi wire core assembly 105 including the base wire core 120 and the insert wire core 135 with rounded corners is shown. The base wire core 120 can include sides 435 and 510 that form continuous rounded outer edges for the multi wire core assembly 105. The corners of the base wire core 120 can be rounded. Furthermore, the cavity 310 of the base wire core 120 can include rounded inner corners. The insert wire core 135 can have surfaces 355 with rounded corners conforming with the rounded corners of the cavity 310 and the outer surface of the base wire core 120. In the embodiment of Figures 16-19, the cavity 310 is shown to include a flat surface 315. The cavity 310 can include a flat surface, and may or may not include a slot 330 in the surface 315.

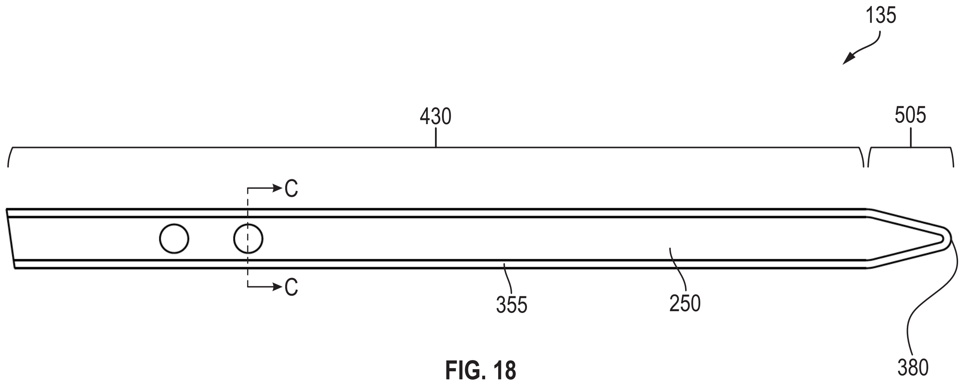

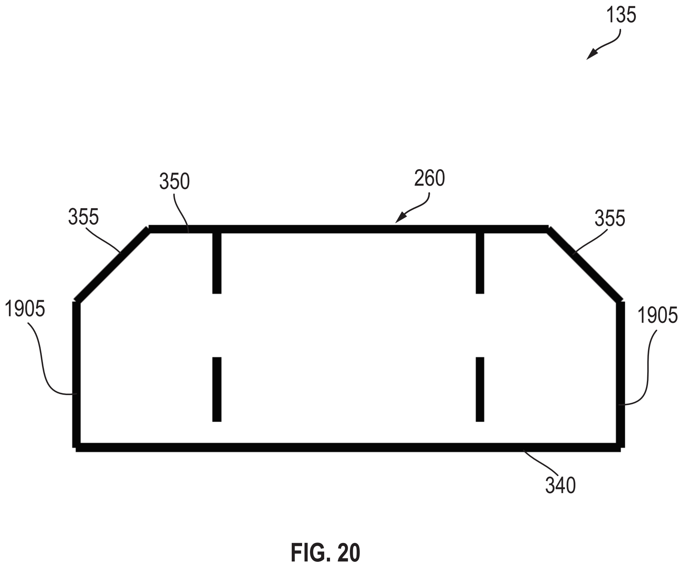

Referring now to Figure 20, a cross-sectional view of the insert wire core 135 taken along plane C-C of Figure 18 is shown. The insert wire core 135 can include a bottom surface 340. The bottom surface 340 can be a flat surface. The bottom surface 340 can be shaped the same as the bottom surface of the cavity 310. For example, the bottom surface 340 can be a rectangular shaped surface. The insert wire core 135 can include lateral sides 1905 that extend upwards from the bottom surface 340 to the sloped surfaces 355. The lateral sides 1905 can be parallel with one another, and extend upwards towards the surfaces 355 or 350 at an angle perpendicular with the bottom surface 340. The surfaces 355 can extend between the respective lateral sides 1905 and the surface 350.

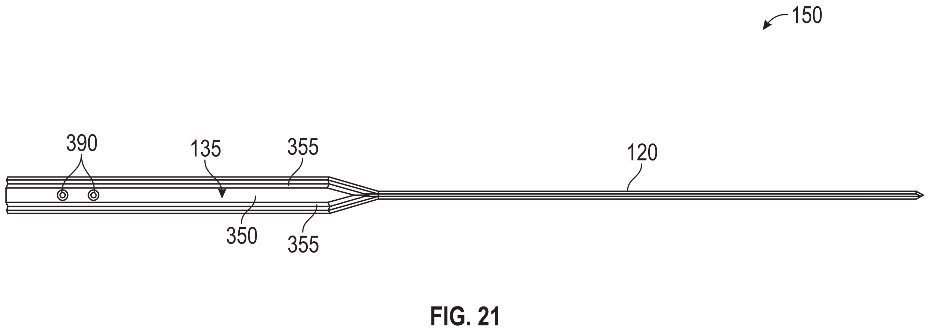

Referring now to Figure 21, a multi wire core assembly 105 with the base wire core 120 and the insert wire core 135 having contrasting colors is shown. The insert wire core 135 can include a surface 350 opposite the surface 340 flush with the surface 315 of the cavity 310 of the base wire core 120. The surface 350 can be visible or viewable. The surface 350 may not be occluded by the base wire core 120 from at least one viewpoint. The surface 350 (and/or the surfaces 355 or the entire insert wire core 135) can have a color different than the color of the base wire core 120. The insert wire core 135 (or the base wire core 120) can be colored via an acrylic, alkyd, or oil based paint. The insert wire core 135 can be a different type of material than the base wire core 120. For example, the base wire core 120 can be or include titanium, steel, aluminum, etc. while the insert wire core 135 can be or include carbon fiber, ceramic, horn, , wood, engraved wood, gold, silver, etc. In some embodiments, the insert wire core 135 is plated with a metal. For example, the insert wire core 135 can be gold or silver plated.

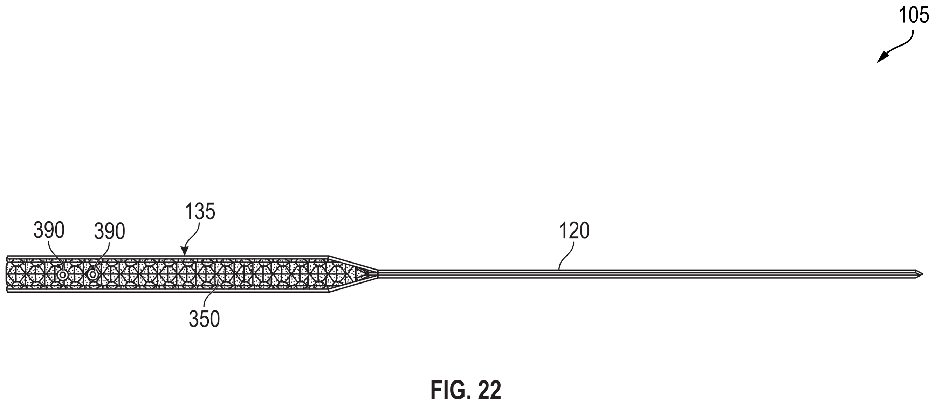

Referring now to Figure 22, the multi wire core assembly 105 where the surface 350 of the insert wire core 135 is textured. The surface 350 can be textured or roughened. The surface 350 can be unsmooth or have a grain. The surface 350 can have geometric shapes protruding from the surface 350. For example, the surface 350 can have a pattern of pyramids, cones, rectangular prisms, cubes, etc. Furthermore, the surface 350 can have at least one decorative component applied to, or embedded in, the surface 350. For example, a gemstone, a diamond, a bead, a precious metal, etc. Furthermore, the surface 350 can include etching. For example, the surface 350 can be laser etched before the multi wire core assembly 105 is inserted into the temple 110.

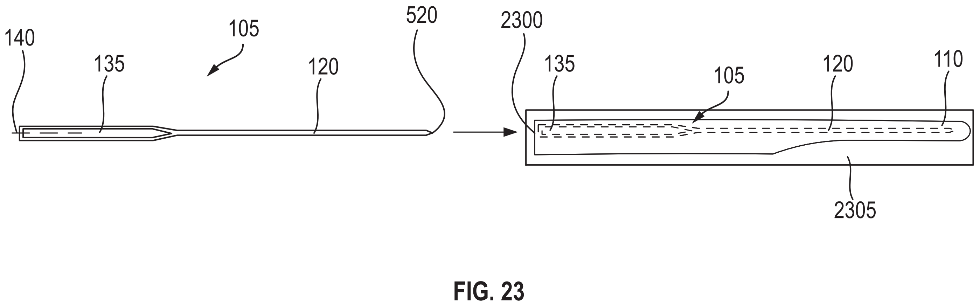

Referring now to Figure 23, the multi wire core assembly 105 being shot into a temple 110 of the eyewear assembly 100 is shown. The multi wire core assembly 105 can be assembled, produced, built, or manufactured, by inserting the insert wire core 135 into the cavity 310 of the base wire core 120, and fixing the insert wire core 135 in the cavity 310. Once the multi wire core assembly 105 is assembled, the multi wire core assembly 105 is shot into the temple 110. For example, the temple 110 can be an acetate temple that is heated and softened and placed in a mold 2305 to couple the temple 110. While the temple 110 is softened, the multi wire core assembly 105 is inserted into the temple 110. The multi wire core assembly 105 is inserted in a direction along the longitudinal axis 140 of the multi wire core assembly 105. The multi wire core assembly 105 is shot such that the end 520 of the base wire core 120 first meets an end 2300 of the temple 110. The end 520 can be pointed to pierce the end 2300. The multi wire core assembly 105 can be shot into the temple 110 by an apparatus that can apply force to the multi wire core assembly 105 to drive the multi wire core assembly 105 into the end 2300 of the temple 110. The apparatus can be driven by a hydraulic system, a motor based system, etc.

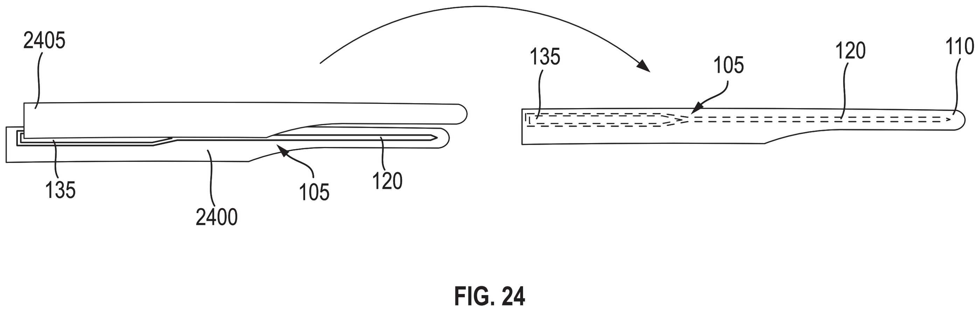

Referring now to Figure 24, the multi wire core assembly 105 being laminated into the temple 110 of the eyewear assembly 100 is shown. After the multi wire core assembly 105 is assembled, the multi wire core assembly 105 is applied to or positioned on a first portion 2400 of the temple 110. The temple 110 includes multiple portions (or layers) laminated one on top of the other to form the temple 110. The first portion 2400 is heated and softened, and the multi wire core assembly 105 is applied to, or at least partially inserted into, the first portion 2400. A second portion 2405 is laminated over the multi wire core assembly 105 onto the first portion 2400 and/or the multi wire core assembly 105. For example, the second portion 2405 is heated and applied onto the first portion 2400. The second portion 2405 bonds to or adheres to the multi wire core assembly 105 and the first portion 2400.

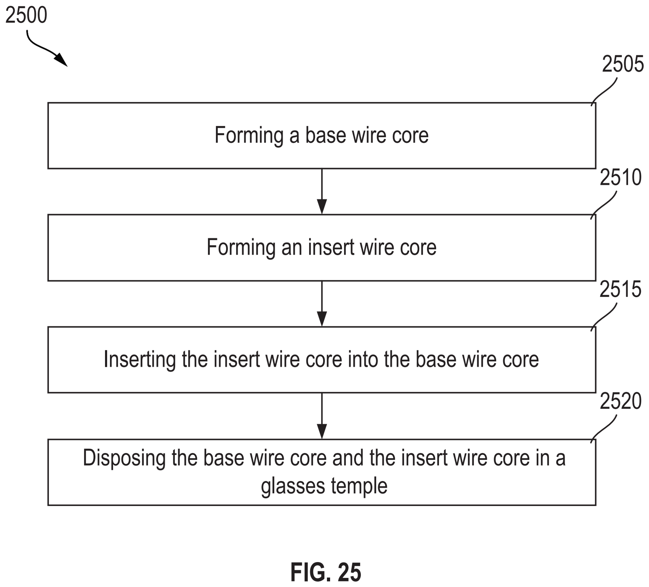

Referring now to Figure 25, a method 2500 of manufacturing the eyewear assembly 100 including the multi wire core assembly 105 is shown. At least a portion of the method 2500 can be performed by a manufacturing apparatus or system. At least a portion of the method 2500 can be performed by a manufacturing individual. The method 2500 can include a step 2505 of forming a base wire core. The method 2500 can include a step 2510 of forming an insert wire core. The method 2500 can include a step 2515 of inserting the insert wire core into the base wire core. The method 2500 can include a step 2520 of disposing the base wire core and the insert wire core in an eyewear temple.

At step 2505, the method 2500 can include forming the base wire core 120. The method 2500 can include forming the base wire core 120, or forming portions of the base wire core 120 and then joining or connecting the portions together. The method 2500 can include forming the base wire core 120 to include an elongated portion 130 and a body 125. The method 2500 can include forming the base wire core 120 to include the elongated portion 130 extending from an end or apex 305 of the body 125 to an end 520 of the elongated portion 130. The method 2500 can include forming the base wire core 120 to include the elongated portion 130 extending from an end or apex 305 of the body 125 along a longitudinal axis 140. The method 2500 can include forming the base wire core 120 to include a cavity 310. The method 2500 can include forming the cavity 310 to include inner surfaces 320, 315, 325, 1010, and 1105. The method 2500 can include forming a cavity 310 with an inner shape to conform with the shape of the insert wire core 135.

At step 2510, the method 2500 can include forming the insert wire core 135. The method 2500 can include forming the insert wire core 135 to fit at least partially within the cavity 310 of the base wire core 120. The method 2500 can include forming the insert wire core 135 to include the portion 335 and the pointed end 370. The method 2500 can include forming the portion 335 to have a hexagonal prism shape, an octagonal prism shape, a cylindrical shape, a rectangular prism shape, etc. The method 2500 can include forming the portion 335 to have a constant cross-section along a longitudinal axis 140 of the insert wire core 135. The method 2500 can include forming a pointed end 370 to include edges and surfaces converging to an apex 380.

At step 2515, the method 2500 can include inserting the insert wire core 135 into the base wire core 120. The method 2500 can include inserting the insert wire core 135 into the cavity 310. The method 2500 can include inserting at least a portion of the insert wire core 135 into the cavity 310. The method 2500 can include aligning surfaces of the insert wire core 135 with the surfaces of the cavity 310. For example, the method 2500 can include positioning the surface 340 onto the surface 315. The method 2500 can include positioning the surfaces 345 onto the surfaces 325 and 320. Furthermore, the method 2500 can include positioning the surface 1405, 1410, and 1415 of the pointed end 370 onto the surfaces 1005, 1105, 1010 of the cavity 310 respectively.

The method 2500 can include fixing, coupling, connecting, or joining the insert wire core 135 with the base wire core 120. The insert wire core 135 and the base wire core 120 can be frictionally coupled with one another. The insert wire core 135 and the base wire core 120 can be coupled via at least one snap or other connector. For example, the method 2500 can include coupling the insert wire core 135 with the base wire core 120 via a connector 390 inserted through an opening 397 in the base wire core 120 and an opening 405 in the insert wire core 135. The method 2500 can include forming the openings 397 in the base wire core 120. The method 2500 can include forming the openings 405 in the insert wire core 135. The openings 397 and 405 can be formed when the base wire core 120 and the insert wire core 135 are cast, molded, etc. The openings 397 and 405 can be formed by drilling or milling the base wire core 120 and the insert wire core 135. The opening 397 and 405 can be formed separately (e.g., before the insert wire core 135 is inserted into the base wire core 120). The openings 397 and 405 can be formed together. For example, after the insert wire core 135 is inserted into the base wire core 120, a drill bit can be drilled through the base wire core 120 and the insert wire core 135 to form the openings 397 and 405 at the same time (together or one after the other). The openings 397 and 405 can be formed along common axes 365, which can be perpendicular to the longitudinal axis 140. The method 2500 can include inserting connectors 390 through the openings 397 and 405 to couple the insert wire core 135 to the base wire core 120. The method 2500 can include inserting the connectors 390 along the axes 365. The openings 397 and 405 can be threaded. Threads of the connectors 390 can interface with threads of the openings 397 and 405 to couple the base wire core 120 with the insert wire core 135.

At step 2520, the method 2500 can include disposing the base wire core 120 and the insert wire core 135 in a glasses temple 110. The method 2500 can include shooting (e.g., inserting) the multi wire core assembly 105 into the temple 110. The method 2500 can include heating the temple 110 to a target temperature (e.g., temperature setpoint) to cause the temple 110 to be soft, flexible, or pliable. Once the temple 110 reaches the target temperature, the method 2500 can include shooting the multi wire core assembly 105 into the heated and softened temple 110. The method 2500 can include shooting the end 520 of the elongated portion 130 into the surface or end 2300 of the temple 110. The method 2500 can include shooting the end 520 of the elongated portion 130 into the temple 110 in a direction along the longitudinal axis 140 of the body 125 of the base wire core 120 of the multi wire core assembly 105. The method 2500 can include shooting the multi wire core assembly 105 into the temple 110 until at least a portion (or an entirety) of the multi wire core assembly 105 is disposed or positioned within the temple 110.

The method 2500 can include forming multiple portions of the temple 110. For example, each portion can be a different layer for the temple 110. The method 2500 can include applying the multi wire core assembly 105 to the first portion 2400. For example, the method 2500 can include heating the first portion 2400, and applying, pressing, or positioning the multi wire core assembly 105 on the first portion 2400. The method 2500 can include laminating the second portion 2405 onto the first portion 2400. The method 2500 can include laminating the second portion 2400 onto the first portion 2405 to cover the multi wire core assembly 105.

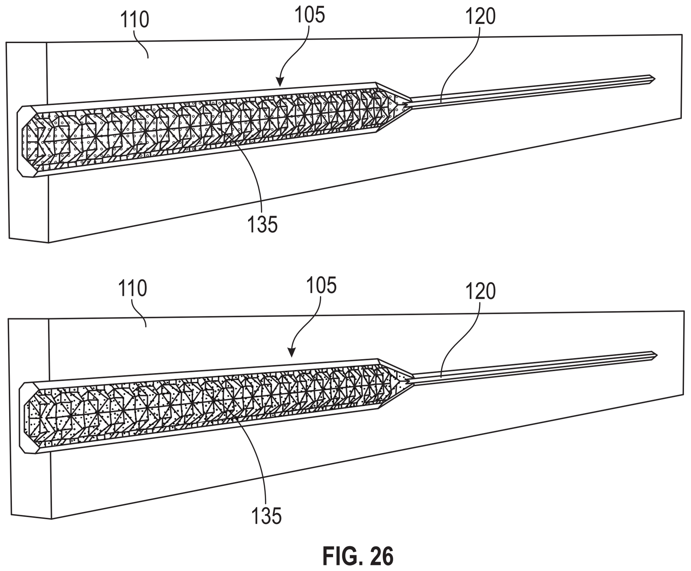

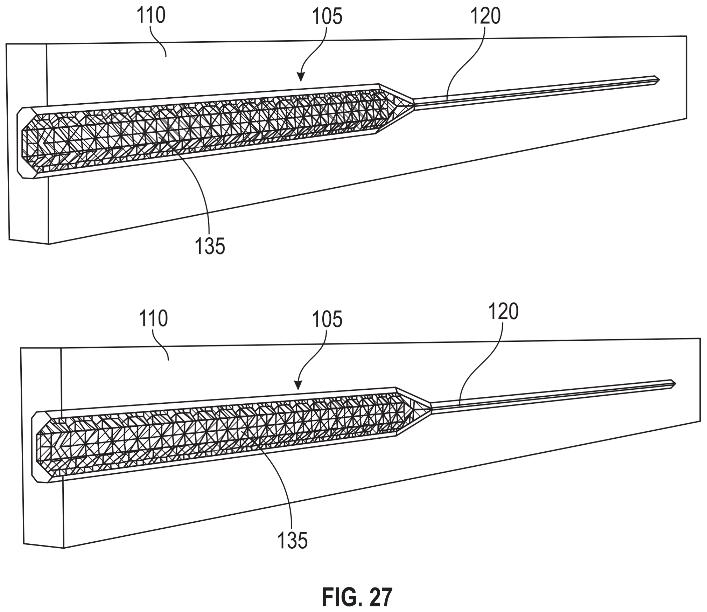

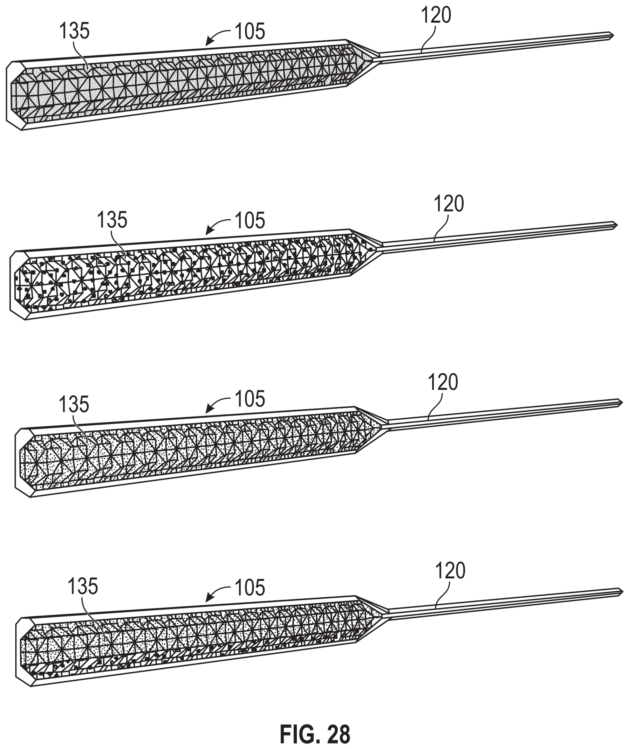

Referring now to Figures 26-28, multi wire cores 105 with different insert wire cores 135 formed from different materials or having different colors are shown. The base wire core 120 can be the same design or the same material across the multi wire cores 105 of Figures 26-28. However, to customize the multi wire core 105, different insert wire cores 135 can be inserted into the cavities 310 of the base wire cores 120. The insert wire cores 135 can have a variety of different colors or be formed from a variety of different materials, as depicted in Figures 26-28. For example, the insert wire cores 135 can be purple, blue, bronze, yellow, gold, rose gold, or any other color or shade. The insert wire cores 135 can be formed from amethyst, lapis lazuli, sapphire, copper, gold, silver, etc.

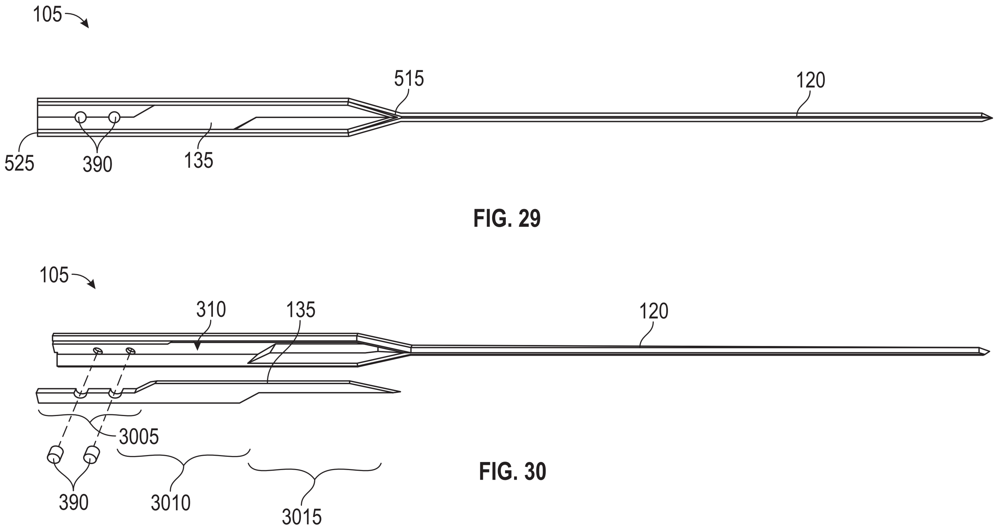

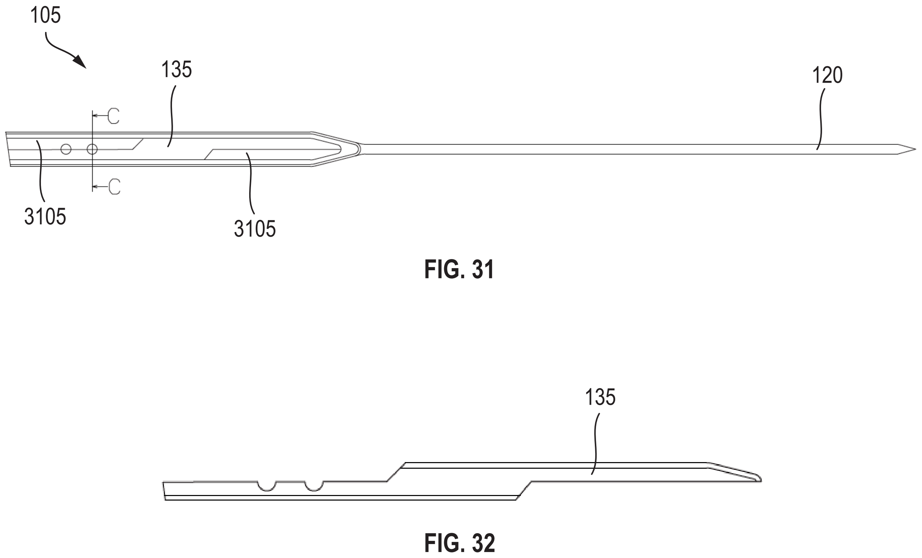

Referring now to Figures 29-32, a multi wire core 105 including a base wire core 120 and an s-shaped insert wire core 135 is shown. The insert wire core 135 shown in Figures 29-32 can be s-shaped. The insert wire core 135 can extend from an end 525 of the base wire core 120 towards or to the end 515. The wire core 135 can include a first portion 3005 which can have a rectangular solid shape that extends from the end 525 to a middle portion 3010. The first portion 3005 can have an edge that meets or is flush with an outer edge of the base wire core 120, but does not extend to the opposing edge of the base wire core 120. The middle portion 3010 can have a parallelogram solid shape. The middle portion 3010 can extend from the first portion 3005 to a third portion 3015, and upwards between top and bottom edges of the base wire core 120. The third portion 3015 can extend from the middle portion 3010 to the end 515. The third portion 3015 can meet the end 515 at a point. The third portion 3015 can extend along or flush with an upper edge of the base wire core 120, but not a bottom edge of the base wire core 120. The cavity 310 can be s-shaped to conform with the s-shaped insert wire core 135 such that the insert wire core 135 can be inserted into the cavity 310. In Figures 31-32, the base wire core 120 and the s-shaped insert wire core 135 can have curved edges. In some embodiments, surfaces 3105 of the base wire core 120 can be raised, roughened, raised and pressed line details, or have texture. In some embodiments, the exposed surface of the insert wire core 135 can be colored, or can have a sunburst or fade color between multiple colors (e.g., from orange to red).

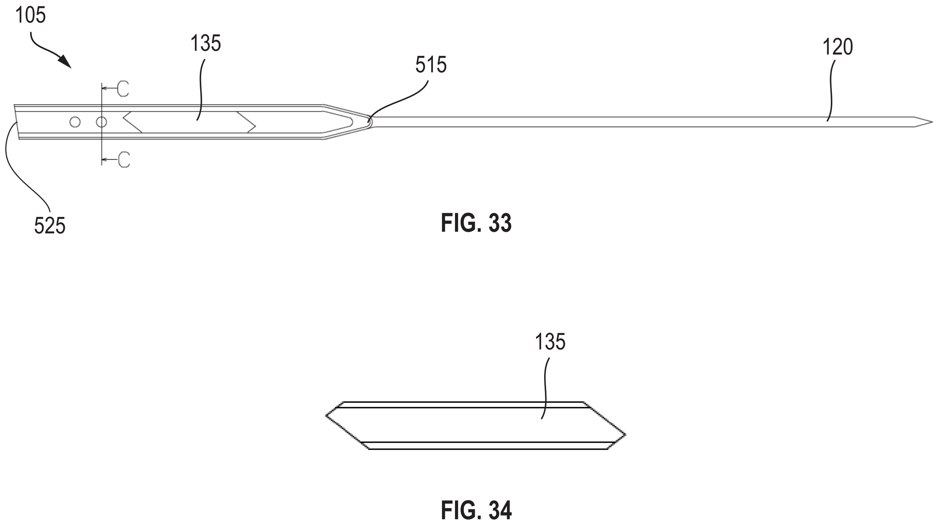

Referring now to Figures 33-34, a multi wire core 105 including an insert wire core 135 having an irregular hexagonal shape is shown. The insert wire core 135 can have six sides of varying lengths. The insert wire core 135 can have six sides, but all six sides may not be the same length. Each side of the insert wire core 135 can have an opposing parallel side of the insert wire core 135. The base wire core 120 can include a cavity 310 that conforms with the irregular hexagonal shape of the insert wire core 135. The cavity 310 can be positioned between the end 525 and the end 515. The base wire core 120 may have space separating the ends 525 and 515 and the cavity 310. The cavity 310 may not meet or extend to the end 525 or 515.

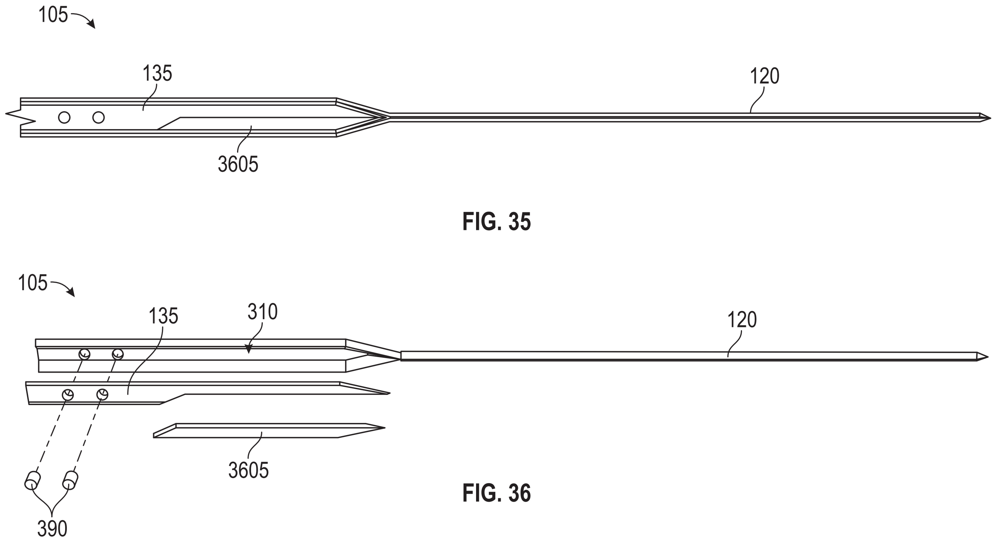

Referring now to Figures 35-36, a multi-wire core 105 including a base wire core 120, a first insert wire core 135, and a second insert wire core 3605 is shown. The first insert wire core 135 and the second insert wire core 3605 can be positioned or inserted into the cavity 310 together. The first insert wire core 135 and the second insert wire core 3605 can couple together or rest upon each other. The first insert wire core 135 can include a cutout region for the second insert wire core 3605 to fit into or within. For example, the second insert wire core 3605 can have a parallelogram shape. The first insert wire core 135 can have a cutout region (e.g., a parallelogram cutout shape) conforming with at least one surface of at least a portion of the insert wire core 3605.

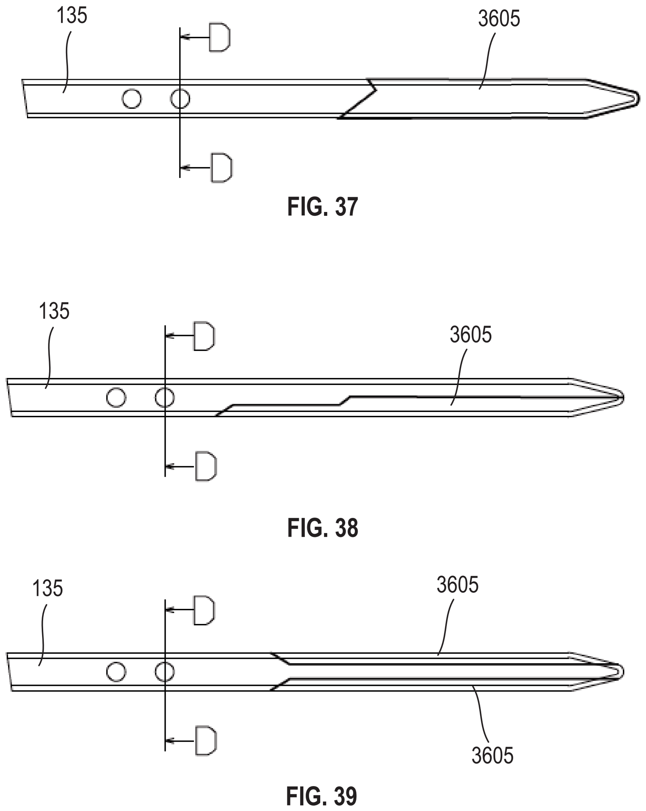

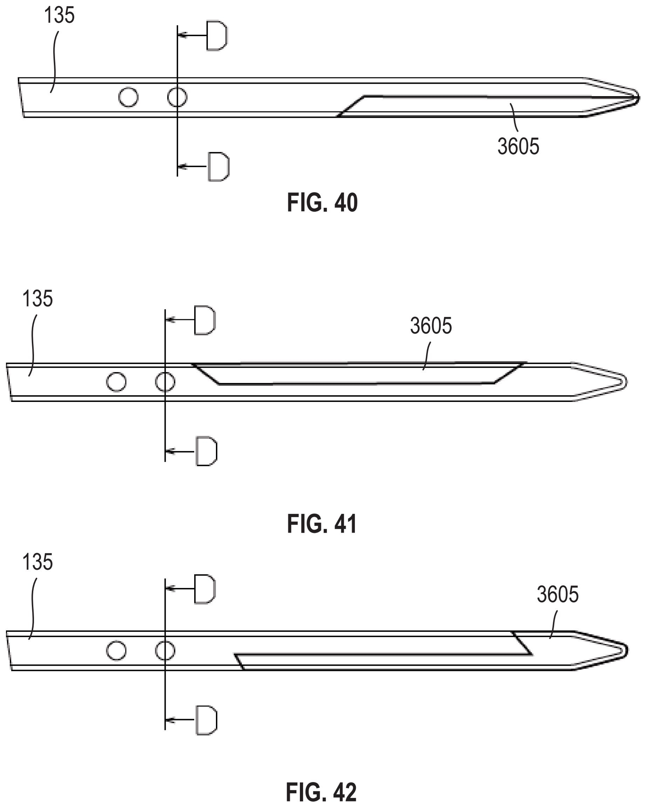

Referring now to Figures 37-42, the first insert wire core 135 and the second insert wire core 3605 are shown, the second insert wire core having a variety of shapes. The first insert wire core 135 and the second insert wire core 3605 can be different materials to provide contrasting colors. The position or shape of the second insert wire core 3605 can be varied, such as a wedge shape shown in Figure 37, two adjacent parallelograms sown in Figure 38, a parallelogram coming to a point or end shown in Figure 40, a trapezoid shape shown in Figure 41, or a parallelogram adjacent a wedge shown in Figure 42.

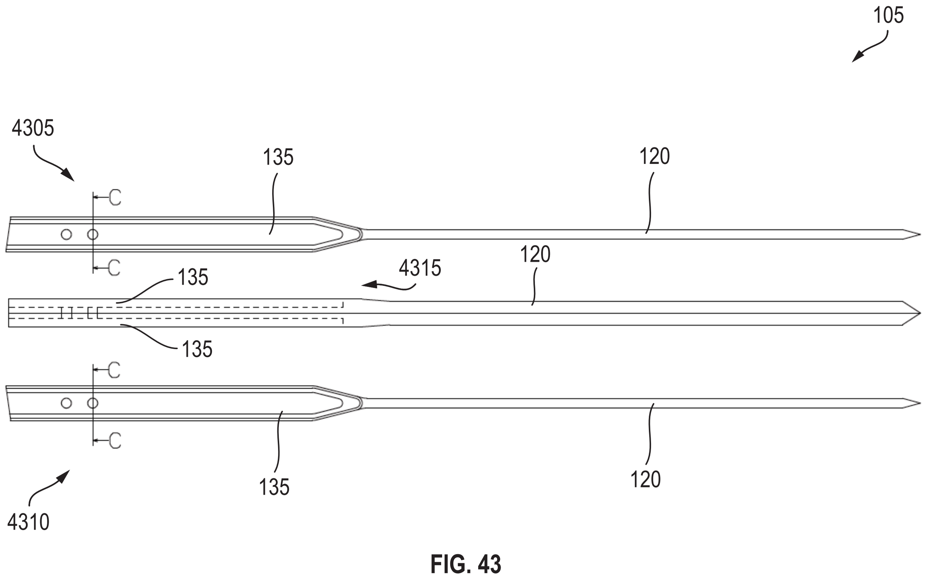

Referring now to Figure 43, among others, a top view 4315 and side views 4305 of the base wire core 120 including a first insert wire core 135 and a second insert wire core 135 on opposite sides of the base wire core 120 are shown. The insert wire cores 135 can be disposed on opposite sides of the base wire core 120. For example, if the wire core assembly 105 is for the right temple 110, one insert wire core 135 can face inwards towards the wearer of the glasses assembly 100, while a second insert wire core 135 can face outwards away from the wearer of the glasses assembly 100. The wire core assembly 105 can include cavities 135 on opposite sides of the inert wire core 120. The insert wire cores 135 can be inserted into, and couple within, the cavities 135 and face away from each other.

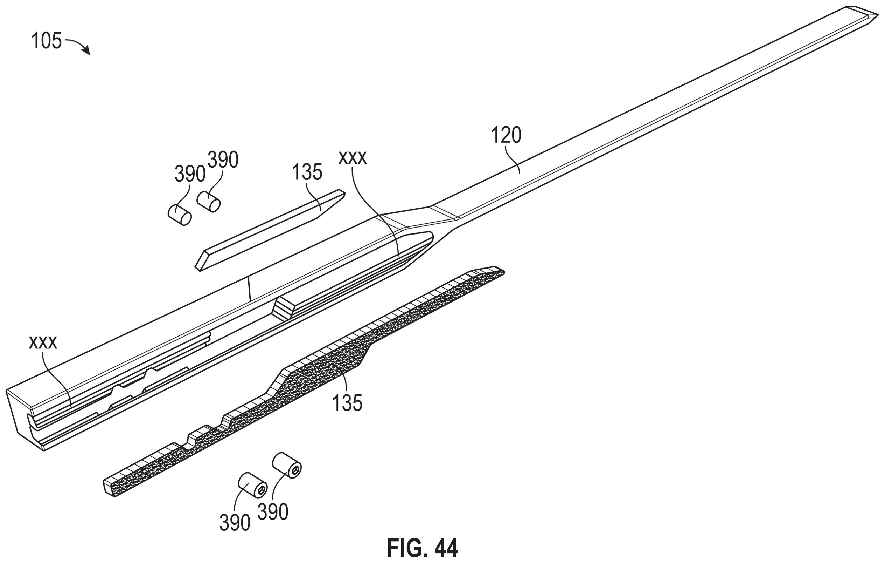

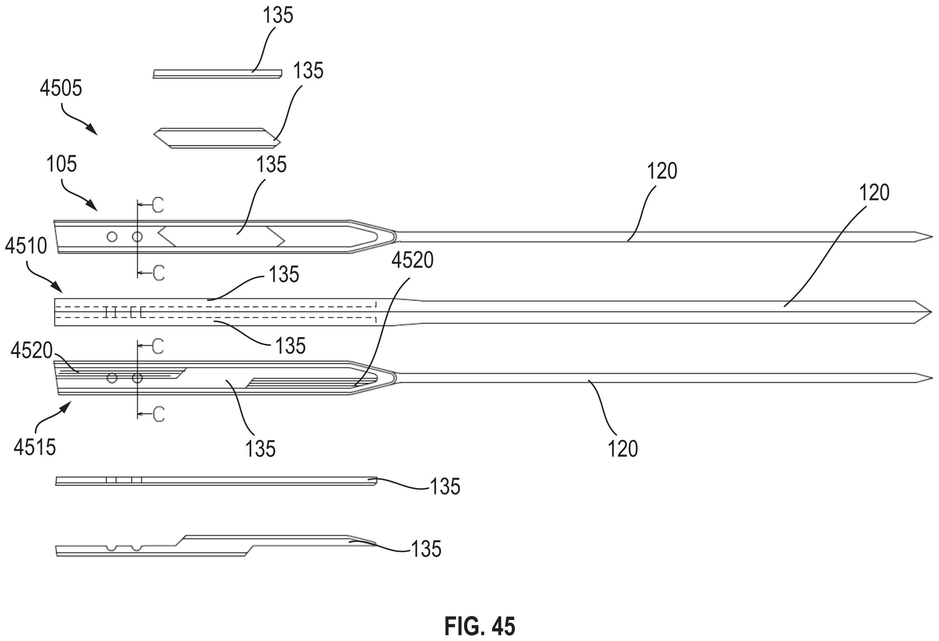

Referring now to Figures 44-45, among others, the base wire core 120 including a first s-shaped wire core 135 and a second insert wire core 135 on opposite sides of the base wire core 120. Figure 44 illustrates the first s-shaped wire core 135 and the second insert wire core 135 from a perspective view, while Figure. 45 depicts a front view 4515, a back view 4505, and a top view 4510 of the first s-shaped wire core 135 and the second insert wire core 135. The s-shaped wire core 135 can have the same geometry as discussed in greater detail with reference to Figures 31 and 32. Likewise, the second insert wire core 135 can have the same geometry and configuration as the insert wire core discussed in greater detail with reference to Figures 33 and 34. However, in Figures 44-45, the two insert wire cores 135 are disposed opposite each other on opposing sides of the base wire core 120. In this regard, the base wire core 120 can have cavities 135 that the insert wire cores 135 can be inserted into, and disposed within. The cavities 135 can be on opposite sides of the base wire core 120, and be shaped to receive the respective insert wire cores 135. The first cavity 135 can have an irregular hexagon shape (such as have an opening that is an irregular hexagon shape) to accommodate or receive the irregular hexagon shape of the insert wire core 135. Similarly, the second cavity 135 can be an s-shaped cavity (such as a cavity with an s-shaped opening) to accommodate the s-shaped insert 135. The base 120 can include surface 4520 around the cavity 135 that the s-shaped insert 135 is disposed within. The surfaces 4520 can be raised, roughened, or otherwise shaped to provide an aesthetic exterior.

### III. Configuration of Example Embodiments

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the terms "approximately," "generally," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the present disclosure as recited in the appended claims.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the various systems shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the disclosure, the scope being defined by the claims that follow. When the language "a portion" is used, the item can include a portion and/or the entire item unless specifically stated to the contrary.

Also, the term "or" is used, in the context of a list of elements, in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W1 to W2, etc.) herein are inclusive of their maximum values and minimum values (e.g., W1 to W2 includes W1 and includes W2, etc.), unless otherwise indicated. Furthermore, a range of values (e.g., W1 to W2, etc.) does not necessarily require the inclusion of intermediate values within the range of values (e.g., W1 to W2 can include only W1 and W2, etc.), unless otherwise indicated.

## Claims

1. An eyewear assembly (100), comprising:
a rim (115);
a first temple (110) coupled with the rim (115); and
a second temple (110) coupled with the rim (115), the second temple (110) comprising a multi wire core (105) disposed within the second temple (110), the multi wire core (105) comprising:
a base wire core (120) comprising:
a body (125) comprising a cavity (310),
an elongated portion (130) extending from the body (125) along a longitudinal axis (140) of the body (125); and
an insert wire core (135) disposed in the cavity (310) of the body (125), the insert wire core (135) coupled with the base wire core (120).

2. The eyewear assembly (100) of claim 1, comprising:
a second insert wire core;
wherein the cavity (310) of the body (125) is formed on a first surface of the body (125); and
wherein the body (125) further comprises a second cavity on a second surface of the body (125) opposite the first surface, wherein the second insert wire core is disposed within the second cavity of the body (125).

3. The eyewear assembly (100) of claim 1 or 2, further comprising a connector (390) inserted through a first opening (405) in the insert wire core (135) and a second opening (397) in the body (125) of the base wire core (120) and coupling the insert wire core (135) to the base wire core (120).

4. The eyewear assembly (100) of any of claims 1 to 3, wherein the cavity (310) comprises a bottom surface (315) comprising an opening;
further comprising a connector (390) inserted through an opening in the insert wire core (135) and the opening in the bottom surface (315) coupling the insert wire core (135) to the base wire core (120).

5. The eyewear assembly (100) of any of claims 1 to 4, wherein the body (125) further comprises:
a slot (330) in a surface of the body (125) to secure a portion of the insert wire core (135), the slot (330) having a rectangular prism shape or a trapezoidal prism shape.

6. The eyewear assembly (100) of any of claims 1 to 5, wherein:
the body (125) comprises a plurality of surfaces to form the cavity (310), the plurality of surfaces comprising:
a first surface (315) extending along the longitudinal axis (140) of the body (125),
a second surface (320) extending from a first edge of the first surface (315) at an oblique angle in a direction perpendicular to the longitudinal axis (140) of the body (125), and
a third surface (325) extending from a second edge of the first surface (315) opposite the first edge, the third surface (325) extending at an oblique angle in a direction perpendicular to the longitudinal axis (140) of the body (125); and
the body (125) further comprises a slot (330) in the first surface (315) to secure a portion of the insert wire core (135), the slot (330) having a rectangular prism shape or a trapezoidal prism shape.

7. The eyewear assembly (100) of any of claims 1 to 6, wherein the insert wire core (135) comprises:
a first surface (340) flush with an inner surface of the cavity (310) of the body (125) of the base wire core (120); and
a second surface (350) opposite to the first surface (340), the second surface (350) comprising at least one decorative component, etching, or texture.

8. The eyewear assembly (100) of any of claims 1 to 7, wherein:
an exposed surface of the insert wire core (135) is positioned at or below a top edge (910) of the cavity (310) of the body (125) of the base wire core (120).

9. A method of manufacturing an eyewear assembly (100), the method comprising:
inserting an insert wire core (135) into a cavity (310) of a base wire core (120) to form a multi wire core assembly (105);
heating a temple (110) of the eyewear assembly (100) within a mold to a target temperature; and
inserting the multi wire core assembly (105) into the temple (110) within the mold after heating the temple (110) to the target temperature.

10. The method of claim 9, further comprising:
forming the base wire core (120) to include a cavity (310); and
forming the insert wire core (135) to fit at least partially within the cavity (310) of the base wire core (120);

11. The method of claim 9 or 10, further comprising:
forming the base wire core (120) to include a body (125) including the cavity (310) and an elongated portion (130) comprising an end (520), the elongated portion (130) extending from the body (125) along a longitudinal axis (140) of the body (125);
heating the temple (110) of the eyewear assembly (100); and
shooting the end (520) of the elongated portion (130) into a surface of the temple (110) in a direction along the longitudinal axis (140) of the body (125) to dispose the base wire core (120) and the insert wire core (135) in the temple (110) of the eyewear assembly (100).

12. The method of any of claims 9 to 11, further comprising:
forming a first portion and a second portion of the temple (110) of the eyewear assembly (100);
applying the base wire core (120) and the insert wire core (135) to the first portion of the temple (110) of the eyewear assembly (100); and
laminating the second portion onto the first portion to cover the base wire core (120) and the insert wire core (135).

13. A multi wire core assembly (105) for a temple (110) of an eyewear assembly (100), the multi wire core assembly (105) comprising:
a base wire core (120), comprising:
a body (125) comprising a cavity (310), and
an elongated portion (130) extending from the body (125) along a longitudinal axis (140) of the body (125); and
an insert wire core (135) disposed in the cavity (310) of the body (125), the insert wire core (135) coupled with the base wire core (120).

14. The multi wire core assembly (105) of claim 13, comprising:
a second insert wire core;
wherein the cavity (310) of the body (125) is formed on a first surface of the body (125); and
wherein the body (125) further comprises a second cavity on a second surface of the body (125) opposite the first surface, wherein the second insert wire core is disposed within the second cavity of the body (125).

15. The multi wire core assembly (105) of claim 13 or 14, further comprising a connector (390) inserted through a first opening (405) in the insert wire core (135) and a second opening (397) in the body (125) of the base wire core (120) and coupling the insert wire core (135) to the base wire core (120).

16. The multi wire core assembly (105) of any of claims 13 to 15, wherein the cavity (310) comprises a bottom surface (315) comprising an opening;
further comprising a connector (390) inserted through an opening in the insert wire core (135) and the opening in the bottom surface (120) coupling the insert wire core (135) to the base wire core (120).

17. The multi wire core assembly (105) of any of claims 13 to 16, wherein the insert wire core (135) comprises:
a first surface (340) flush with an inner surface of the cavity (310) of the body (125) of the base wire core (120); and
a second surface (350) opposite to the first surface (340), the second surface (350) comprising at least one decorative component, etching, or texture.

18. The multi wire core assembly of any of claims 13 to 17, wherein the body (120) comprises a plurality of surfaces to form the cavity (310), the plurality of surfaces comprising:
a first surface (315) extending along the longitudinal axis (140) of the body (125);
a second surface (320) extending from a first edge of the first surface (315) at an oblique angle in a direction perpendicular to the longitudinal axis (140) of the body (125); and
a third surface (325) extending from a second edge of the first surface (315) opposite the first edge, the third surface extending at an oblique angle in a direction perpendicular to the longitudinal axis (140) of the body (125).

19. The multi wire core assembly of any of claims 13 to 18, wherein the body (125) further comprises:
a slot (330) in a surface of the body (125) to secure a portion of the insert wire core (135), the slot (330) having a rectangular prism shape or a trapezoidal prism shape.

20. The multi wire core assembly of any of claims 13 to 19, wherein:
an exposed surface of the insert wire core (135) is positioned at or below a top edge (190) of the cavity (310) of the body (125) of the base wire core (120).
